# EUROPEAN PATENT APPLICATION

(11) **EP 4 834 068 A1**
(43) Date of publication of application: **04.11.2026**
(21) Application number: 24912589.9
(22) Date of filing: 19.12.2024
(51) Int. Cl.: A01B 69/00

(54) **WORK VEHICLE**

(30) Priority: 28.12.2023 JP 2023223361
(71) Applicant: KUBOTA CORPORATION, Osaka-shi, Osaka 530-0011 (JP)
(72) Inventor: MAKINO Ryota, Sakai-shi, Osaka 590-0908 (JP); SAKANO Tomoyoshi, Sakai-shi, Osaka 590-0908 (JP); KAWABATA Masahiro, Sakai-shi, Osaka 590-0908 (JP); FUKUDA Ryosuke, Sakai-shi, Osaka 590-0908 (JP); TOKIEDA Yoshiki, Sakai-shi, Osaka 590-0908 (JP)
(74) Representative: Cabinet Beau de Loménie
(86) International application number: PCT/JP2024/044895
(87) International publication number: WO 2025/142700

(57) **Abstract**

Provided is a working vehicle including a detector capable of reliably detecting an object at a target detection position in accordance with a change in state of a vehicle body.

A working vehicle (1) includes a vehicle body (2), a detector (10) provided in or on the vehicle body (2) to detect an object present at a predetermined detection position distant from the vehicle body (2), a vehicle-body-state changer (100) to change a state of the vehicle body (2), and a detection adjuster (110) to perform a detection position matching to achieve a match between the detection position before a change in the state of the vehicle body (2) and the detection position after the change in the state of the vehicle body (2).

## Description

### Technical Field

The present invention relates to working vehicles to perform work such as agricultural work.

### Background Art

For example, PTL 1 discloses a working vehicle including a detector for detecting the situation around the vehicle for safety confirmation. This detector is configured to be able to change a detection position by changing the angle.

In recent years, in agricultural work or the like using a working vehicle, the working mode is shifting from a working mode in which an operator rides on a vehicle and performs manual operation to a working mode in which a working vehicle is caused to travel without a person, such as a remote-operation working mode in which an operator remotely operates the vehicle using a terminal device or the like, or an autonomous-traveling working mode in which the vehicle is caused to travel using GPS along a route set in an agricultural field.

Hence, the form of the vehicle may also be shifted from a typical tractor form including an operator's seat to a form that is more convenient for executing an intended work, such as agricultural work, or a form having good protection of the respective parts.

For example, a case is considered where agricultural work is performed using an unmanned working vehicle including a vehicle body and left and right traveling structures including wheels and the like arranged at both the left and right sides of the vehicle body. The vehicle body is positioned to straddle a ridge, and the left and right traveling structures are arranged at both the left and right sides of the ridge.

For this agricultural work, the thus-configured working vehicle may be configured such that the width in the left-right direction of the vehicle body can be changed to match the width of the ridge, such that the vehicle body can be moved in the up-down direction to match, for example, the growth stage of crops planted in the ridge, and such that a working device is coupled or not coupled to the vehicle body depending on the purpose. In other words, the working vehicle may be configured such that the state of the vehicle body is changeable.

### Citation List

### Patent Literature

PTL 1: Japanese Unexamined Patent Application Publication No. 2009-301146

### Summary of Invention

### Technical Problem

It is important for the unmanned traveling working vehicle as described above to include a detector for detecting the situation around the vehicle in order to confirm safety when the vehicle starts and to confirm the width of the ridge to be worked, the growth stage of crops in the ridge, and the like.

An object of the present invention is to provide working vehicles each capable of reliably detecting the situation around the vehicle even when the state of the vehicle is changed.

### Solution to Problem

A working vehicle according to an example embodiment of the present invention includes a vehicle body, a detector provided in or on the vehicle body to detect an object present at a predetermined detection position distant from the vehicle body, a vehicle-body-state changer to change a state of the vehicle body, and a detection adjuster to perform a detection position matching to achieve a match between the detection position before a change in the state of the vehicle body and the detection position after the change in the state of the vehicle body.

The detection adjuster may be configured to perform the detection position matching by changing a position of the detector after the change in the state of the vehicle body to a position that differs from the position of the detector before the change in the state of the vehicle body.

The detection adjuster may be configured to perform the detection position matching by changing an orientation of the detector after the change in the state of the vehicle body to an orientation that differs from the orientation of the detector before the change in the state of the vehicle body.

The detector may be configured to, after the change in the state of the vehicle body, if a parameter indicating a result of detection of the object present at the detection position changes due to the detection position matching performed by the detection adjuster, correct the changed parameter to a parameter indicating a result of detection of the object that was present at the same position before the change in the state of the vehicle body and before the detection position matching.

The vehicle-body-state changer may include a vehicle-body mover to move the vehicle body. The detection adjuster may be configured to perform the detection position matching according to a movement of the vehicle body caused by the vehicle-body mover.

The vehicle-body mover may be configured to move the vehicle body in an up-down direction.

The vehicle-body-state changer may include a vehicle-body-shape changer to change a shape of the vehicle body. The detection adjuster may be configured to perform the detection position matching according to a change in a shape of the vehicle body caused by the vehicle-body-shape changer.

The working vehicle may further include a left traveling structure provided at a left side of the vehicle body, and a right traveling structure provided at a right side of the vehicle body. The vehicle-body-shape changer may be configured to change a width of the vehicle body in a left-right direction, to change the shape of the vehicle body and change a vehicle width corresponding to a distance between the left traveling structure and the right traveling structure in the left-right direction.

The vehicle-body-state changer may include a linkage to couple one of working devices selectively to the vehicle body. The detection adjuster may be configured to perform the detection position matching according to the one of the working devices coupled to the vehicle body via the linkage.

### Advantageous Effects of Invention

According to the working vehicle of the present invention, an object located at a position that was detectable before a change in the state of the vehicle body 2 can be reliably detected after the change in the state of the vehicle body.

### Brief Description of Drawings

[FIG. 1] FIG. 1 is a perspective view of a working vehicle.
[FIG. 2] FIG. 2 is a left side view of the working vehicle.
[FIG. 3] FIG. 3 is a right side view of the working vehicle.
[FIG. 4] FIG. 4 is a front view of the working vehicle.
[FIG. 5] FIG. 5 is a rear view of the working vehicle.
[FIG. 6] FIG. 6 is a plan view of the working vehicle.
[FIG. 7] FIG. 7 is a block diagram illustrating an overall configuration of the working vehicle.
[FIG. 8] FIG. 8 is a left side view of the working vehicle with a vehicle body raised.
[FIG. 9] FIG. 9 is a plan view of the working vehicle with the vehicle body expanded in the left-right direction.
[FIG. 10] FIG. 10 includes schematic side views of the working vehicle performing a detection position matching in response to a change in the state of the vehicle body, and views illustrating screens displaying what is detected.
[FIG. 11] FIG. 11 is a schematic side view of the working vehicle performing the detection position matching in response to raising of the vehicle body.
[FIG. 12] FIG. 12 is a schematic side view of the working vehicle performing the detection position matching performed when a ground working device is mounted.
[FIG. 13] FIG. 13 is a schematic side view of the working vehicle performing the detection position matching performed when a combine unit is mounted.
[FIG. 14] FIG. 14 includes schematic side views and schematic front views of the working vehicle performing the detection position matching in response to raising and a change in the width of the vehicle body when a sprayer is mounted.
[FIG. 15] FIG. 15 is a schematic view illustrating changes in parameters resulting from detection position matching performed when the vehicle body is raised, and screens showing what is detected in the process of correcting the parameters.

### Description of Embodiments

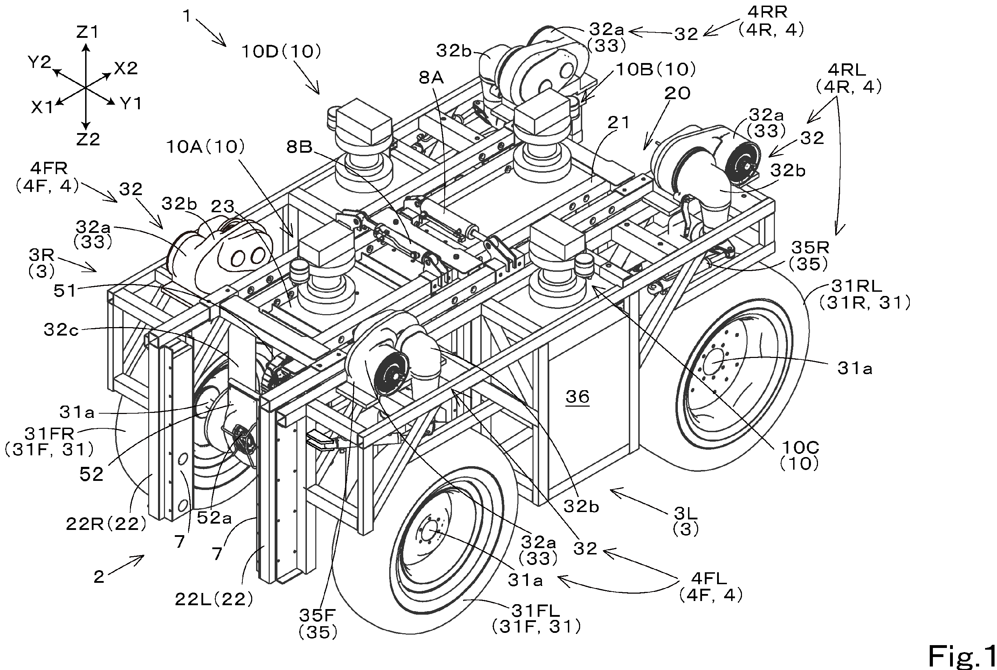

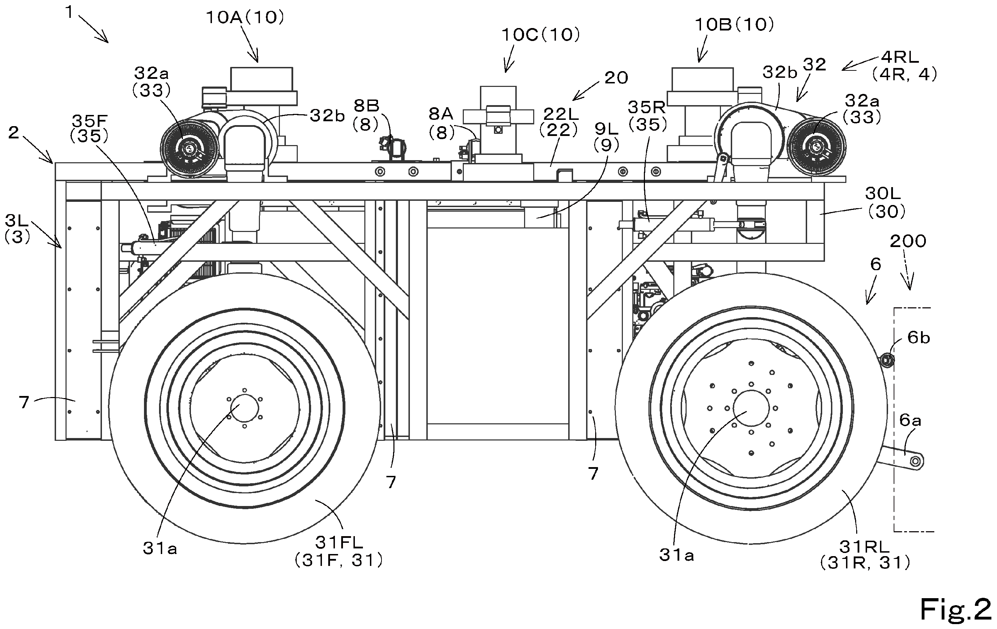

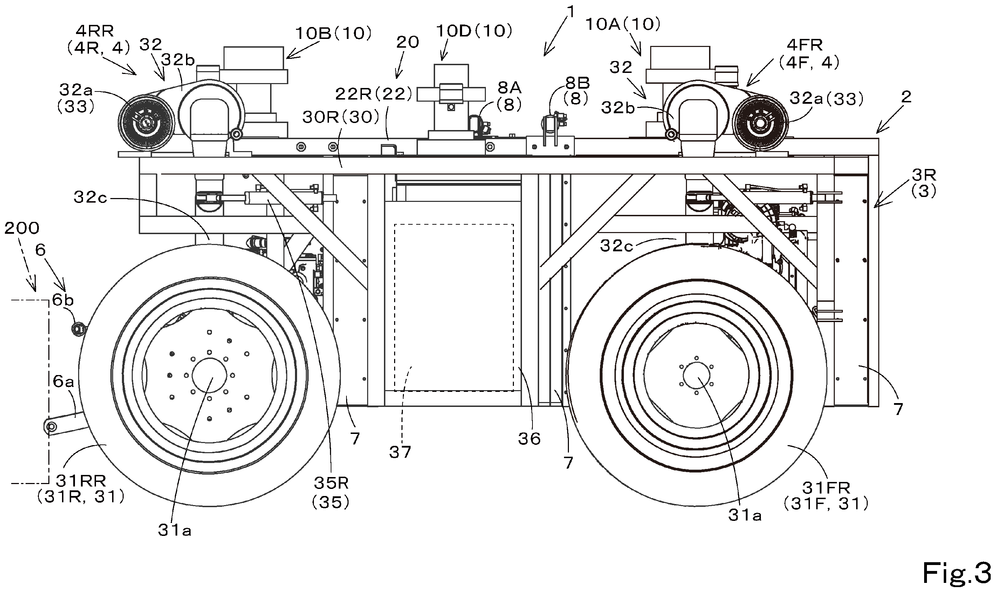

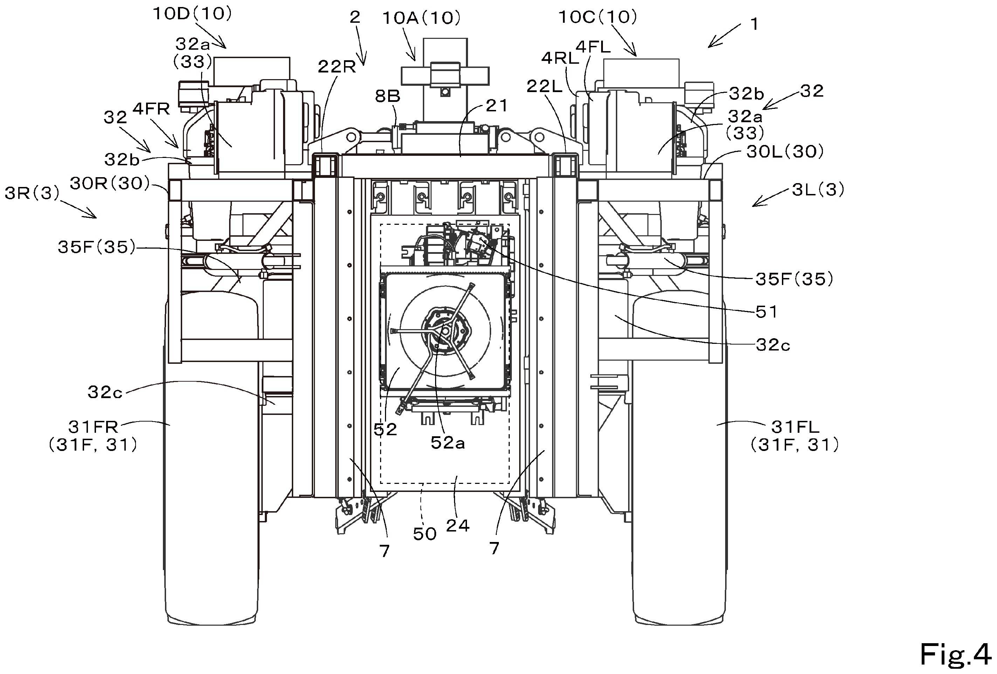

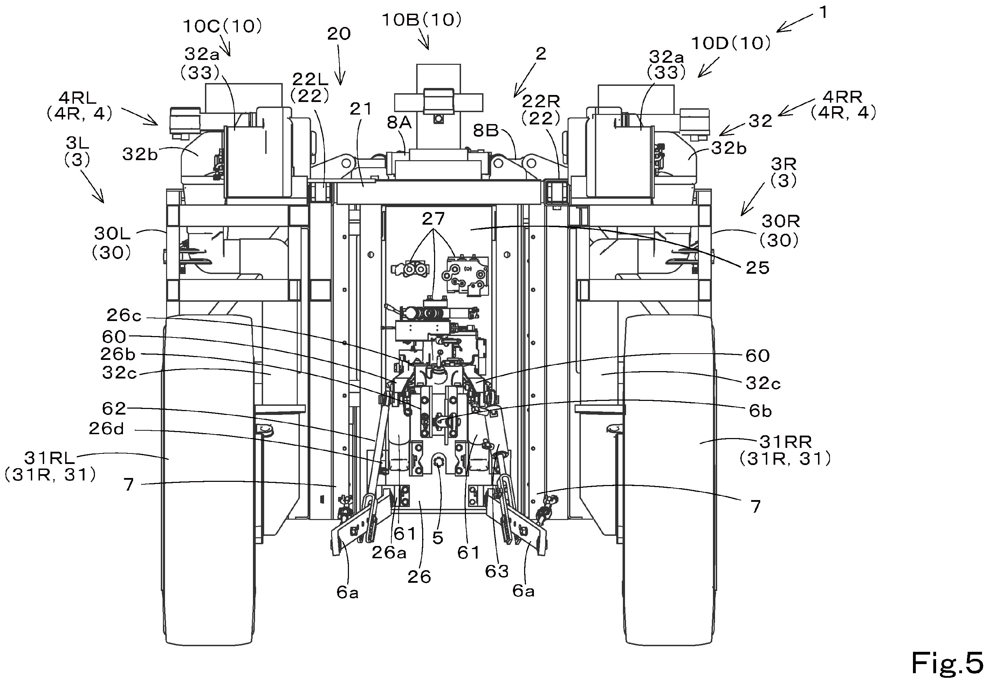

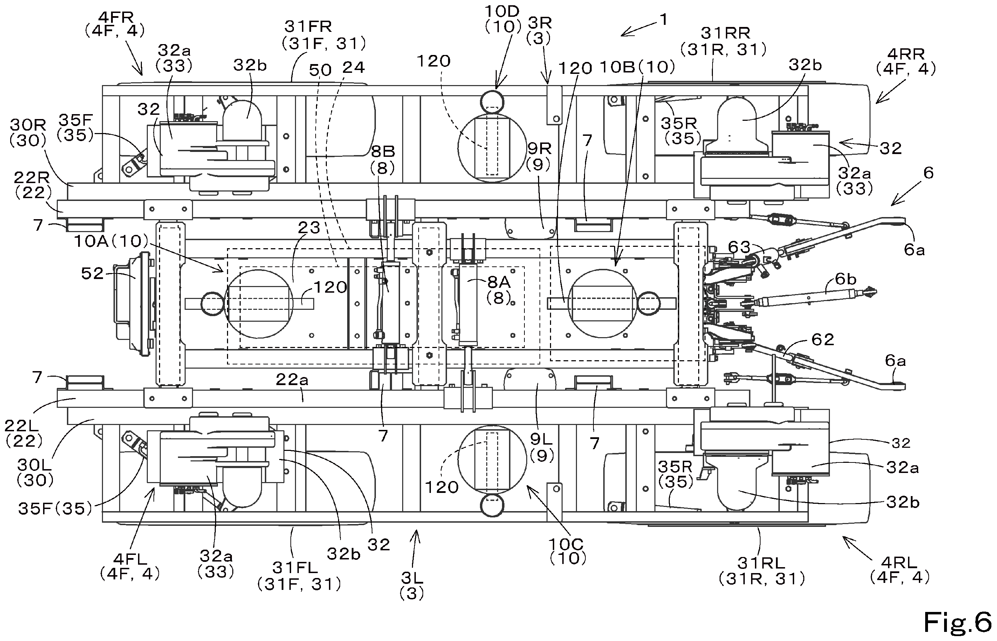

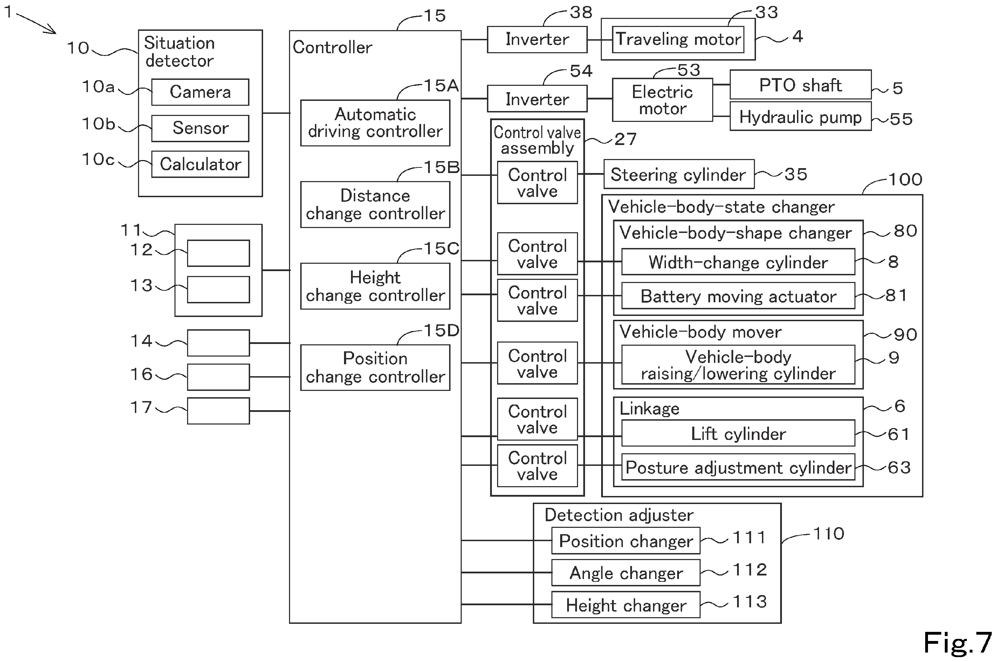

Hereinbelow, preferred example embodiments of a working vehicle 1 according to the present invention will be described. FIGS. 1 to 7 illustrate one example embodiment of the working vehicle 1. FIG. 1 is a perspective view of the working vehicle 1. FIG. 2 is a left side view of the working vehicle 1. FIG. 3 is a right side view of the working vehicle 1. FIG. 4 is a front view of the working vehicle 1. FIG. 5 is a rear view of the working vehicle 1. FIG. 6 is a plan view of the working vehicle 1. FIG. 7 is a block diagram illustrating an overall configuration of the working vehicle 1.

In the following description, the direction indicated by arrow X1 in FIG. 1 is referred to as the front, the direction indicated by arrow X2 is referred to as the rear, the direction indicated by arrow Y1 is referred to as the left, the direction indicated by arrow Y2 is referred to as the right, the direction indicated by arrow Z1 is referred to as the top, and the direction indicated by arrow Z2 is referred to as the bottom.

Examples of work performed by the working vehicle 1 include work related to agriculture, work related to industry (civil engineering, construction, etc.), and work related to transportation, but the work is not limited thereto. In a preferred example embodiment of the present invention, the work performed by the working vehicle 1 is work related to agriculture (agricultural work). Hereinbelow, a case where the working vehicle 1 performs agricultural work will be described as an example. In this case, the working vehicle 1 is an agricultural working vehicle.

As illustrated in FIGS. 1 to 6, the working vehicle 1 includes a vehicle body 2, a left traveling structure 3L positioned at the left side of the vehicle body 2, and a right traveling structure 3R positioned at the right side of the vehicle body 2. Hereinbelow, each of the left traveling structure 3L and the right traveling structure 3R may be referred to as a traveling structure 3.

As illustrated in FIG. 5, the vehicle body 2 includes, at the rear end thereof, a PTO shaft 5 for transmitting driving force to a working device (implement) 200 (see FIGS. 2 and 3) coupled to the working vehicle 1, and a linkage 6 for coupling the working device 200 to the working vehicle 1 is attachable to the rear end.

The linkage 6 may have various structures depending on the type of the working device (implement) 200 and the like, and in the present example embodiment, the linkage 6 is a three-point linkage including a pair of left and right lower links 6a and one top link 6b.

The working device 200 may also be coupled to a portion (for example, the front end) other than the rear end of the vehicle body 2 of the working vehicle 1, and may receive driving force from the working vehicle 1. Alternatively, the working vehicle 1 may be configured without a linkage, and may include the working device 200 in a state of being mounted on the vehicle body 2, for example.

The structure of each traveling structure 3 will be described. Each traveling structure 3 includes a traveling frame 30 and a pair of wheel assemblies 4. The pair of wheel assemblies 4 includes a front wheel assembly 4F supported at a front portion of the traveling frame 30 and a rear wheel assembly 4R supported at a rear portion of the traveling frame 30.

Each wheel assembly 4 includes one wheel 31 and a wheel drive case 32 that supports an axle 31a, which is a central axis of the wheel 31. The wheels 31 of the front wheel assemblies 4F are front wheels 31F, and the wheels 31 of the rear wheel assemblies 4R are rear wheels 31R. In a front view, the outer ends of the wheels 31 substantially coincide with the outer ends of the traveling frames 30.

In the present example embodiment, the front wheels 31F and the rear wheels 31R have the same diameter. However, the front wheels 31F and the rear wheels 31R may have different diameters. Furthermore, at least one of the front wheels 31F and the rear wheels 31R may serve as drive wheels (drive sprocket) of a crawler-type traveling device.

More specifically, the traveling frame 30 of the left traveling structure 3L is a left traveling frame 30L, the front wheel assembly 4F supported at the front portion of the left traveling frame 30L is a left front wheel assembly 4FL including a left front wheel 31FL, and the rear wheel assembly 4R supported at the rear portion of the left traveling frame 30L is a left rear wheel assembly 4RL that rotatably supports a left rear wheel 31RL.

The traveling frame 30 of the right traveling structure 3R is a right traveling frame 30R, the front wheel assembly 4F supported at the front portion of the right traveling frame 30R is a right front wheel assembly 4FR that rotatably supports a right front wheel 31FR, and the rear wheel assembly 4R supported at the rear portion of the right traveling frame 30R is a right rear wheel assembly 4RR that rotatably supports a right rear wheel 31RR.

The wheel drive case 32 of each wheel assembly 4 includes a motor accommodating portion 32a, a transmission-mechanism accommodating portion 32b, and a rotating cylindrical portion 32c. The motor accommodating portion 32a and the transmission-mechanism accommodating portion 32b are integrally formed at an upper portion of the wheel drive case 32, and the rotating cylindrical portion 32c extends vertically downward from the transmission-mechanism accommodating portion 32b, which extends laterally from the motor accommodating portion 32a. The rotating cylindrical portion 32c is connected to the transmission-mechanism accommodating portion 32b so as to be relatively rotatable.

A traveling motor 33 is accommodated in the motor accommodating portion 32a, and a vertical transmission shaft 34 having an axis extending in the up-down (vertical) direction is supported so as to be rotatable about the axis thereof in the rotating cylindrical portion 32c. The central axes (axles) 31a of the wheels 31 are inserted into and supported by the lower ends of the rotating cylindrical portions 32c. In other words, the axles 31a protrude outward to the left and the right from the lower portions of the rotating cylindrical portions 32c of the wheel drive cases 32, and the wheels 31 provided around the axles 31a are arranged on the left and right outer sides of the rotating cylindrical portions 32c.

Furthermore, the transmission-mechanism accommodating portions 32b accommodate, in the interior thereof, transmission mechanisms including a bevel gear and an endless belt that operatively connect the output shafts of the traveling motors 33 and the upper portions of the vertical transmission shafts 34. Furthermore, the lower portions of the rotating cylindrical portions 32c accommodate transmission mechanisms including a bevel gear and the like that operatively connect the lower portions of the vertical transmission shafts 34 and the axles 31a of the wheels 31.

Note that, because the traveling frames 30 support the wheel drive cases 32 that support the axles 31a of the wheels 31, the traveling frames 30 may be described as supporting the axles 31a.

With this configuration, in the wheel drive cases 32, the output of the traveling motors 33 is transmitted to the wheels 31 via the vertical transmission shafts 34, thus driving the wheels 31. Specifically, each of the left front wheel 31FL, the right front wheel 31FR, the left rear wheel 31RL, and the right rear wheel 31RR is a drive wheel that is driven by the output of the traveling motor 33 individually provided for the wheels.

The rotating cylindrical portion 32c of each wheel drive case 32 extends in the up-down direction as described above, and the axis of the vertical transmission shaft 34 extending in the up-down direction coincides with the axis of the rotating cylindrical portion 32c. In each wheel drive case 32, the upper portion constituting the motor accommodating portion 32a and the transmission-mechanism accommodating portion 32b is attached to and fixed to the traveling frame 30, and the rotating cylindrical portion 32c is rotatable about the axis extending in the up-down direction relative to the upper portion.

Each traveling frame 30 supports a pair of front and rear steering cylinders 35. The steering cylinder 35 supported at the front portion of the traveling frame 30 is a front steering cylinder 35F. One end (cylinder bottom) of the front steering cylinder 35F is connected to the traveling frame 30, and the other end (piston rod head) of the front steering cylinder 35F is connected to the outer portion of the rotating cylindrical portion 32c of the wheel drive case 32 of the front wheel assembly 4F.

The steering cylinder 35 supported at the rear portion of the traveling frame 30 is a rear steering cylinder 35R. One end (cylinder bottom) of the rear steering cylinder 35R is connected to the traveling frame 30, and the other end (piston rod head) of the rear steering cylinder 35R is connected to the outer portion of the rotating cylindrical portion 32c of the wheel drive case 32 of the rear wheel assembly 4R.

The rotating cylindrical portions 32c of the wheel drive cases 32 rotate about the axes extending in the up-down direction due to the extension or retraction of the steering cylinders 35 while supporting the wheels 31. Specifically, the wheels 31 are drive wheels driven by the traveling motors 33 as described above, and are also steering wheels that are rotatable relative to the traveling frames 30 in the left-right direction, that is, the angles of the wheels 31 in the left-right direction can be changed.

Each traveling motor 33 is an electric motor, and an inverter 38 for controlling the output thereof is provided in the traveling structure 3. As illustrated in FIG. 7, the controller 15 controls the inverter 38, thus controlling the output rotational speed and the output rotational direction of the corresponding traveling motor 33.

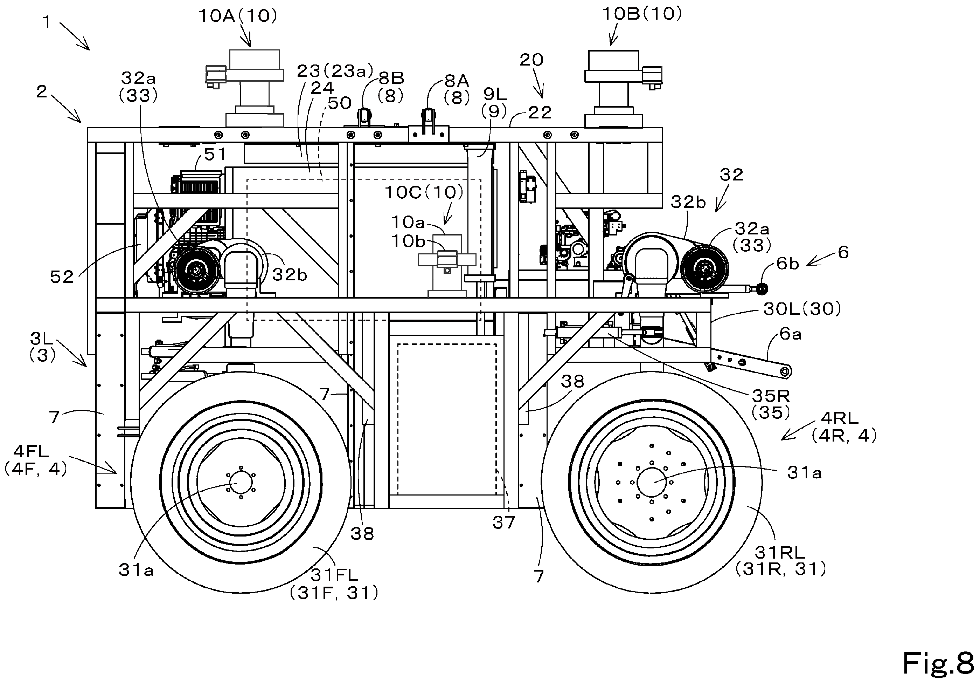

For example, as illustrated in FIG. 8, in the traveling structures 3, the inverters 38 may be supported by the traveling frames 30, near a battery case 36 described below, but the support structure is not limited thereto.

Note that the block diagram in FIG. 7 illustrates the combination of the traveling motor 33 and the inverter 38 for one wheel assembly 4, but the wheel assembly 4 herein represents each of the four wheel assemblies 4FL, 4FR, 4RL, and 4RR, and the controller 15 individually controls the rotational speed and rotational direction of each wheel 31 by controlling the inverter 38 for each wheel assembly 4.

The traveling frame 30 of each traveling structure 3 supports a battery (side battery) 37 for supplying power to the traveling motors 33 of the front wheel assembly 4F and the rear wheel assembly 4R, the inverter 38 for the traveling motor 33 of the front wheel assembly 4F, and the inverter 38 for the traveling motor 33 of the rear wheel assembly 4R.

As illustrated in FIG. 1 and the like, the side battery 37 is housed in the battery case 36 supported by the traveling frame 30, between the front wheel 31F and the rear wheel 31R, but the support structure for the side battery 37 in the traveling structure 3 is not limited thereto.

The block diagram in FIG. 7 illustrates only one steering cylinder 35, similarly to the traveling motor 33 and the inverter 38 described above, but this steering cylinder 35 represents one provided in each wheel assembly 4, and the controller 15 individually controls the steering angle (left-right turning angle) of each wheel 31 by controlling a control valve for the steering cylinder 35 provided for each wheel assembly 4.

Each steering cylinder 35 may be a cylinder other than a hydraulic cylinder, and may be an air cylinder, a water-pressure cylinder, or the like. Furthermore, the actuators for steering the wheels 31 may be, besides the extension/retraction actuators as described above, for example, actuators that rotate the rotating cylindrical portions 32c by outputting rotational force, such as electric motors, hydraulic motors, or the like.

The configuration of each traveling structure 3, that is, the configuration of each of the left traveling structure 3L and the right traveling structure 3R, has been described above. Next, the configuration of the vehicle body 2 positioned between the left traveling structure 3L and the right traveling structure 3R and various devices provided in the vehicle body 2 will be described.

The vehicle body 2 includes a vehicle-body frame structure 20, and a front body case (battery case) 24 and a rear body case (PTO case) 26 supported by the vehicle-body frame structure 20.

The vehicle-body frame structure 20 includes a vehicle-body central frame 21, a left-vehicle-body side frame 22L positioned at the left side of the vehicle-body central frame 21, and a right-vehicle-body side frame 22R positioned at the right side of the vehicle-body central frame 21. Hereinbelow, each of the left-vehicle-body side frame 22L and the right-vehicle-body side frame 22R may be referred to as a vehicle-body side frame 22.

A plate-shaped support member 23 is fixed to a lower portion of a portion from the front end to a midway portion in the front-rear direction of the vehicle-body central frame 21, and a rectangular-parallelepiped-shaped front body case 24 is suspended from the support member 23. An upper end of the front body case 24 is engaged with the support member 23 so as to be movable in the front-rear direction.

Each vehicle-body side frame 22 is connected to the vehicle-body central frame 21 so as to be movable relative thereto in the left-right direction. A pair of width-change cylinders 8A and 8B extending in the left-right direction, which serve as a vehicle-body-shape changer (actuator) 80 (see FIG. 7) for changing the width of the vehicle body 2 in the left-right direction, that is, for changing the shape of the vehicle body 2, are provided on the upper portion of the vehicle-body central frame 21. Hereinbelow, each of the pair of width-change cylinders 8A and 8B may be referred to as a width-change cylinder 8.

The width-change cylinder 8A extends and retracts to change the distance between the vehicle-body central frame 21 and the left-vehicle-body side frame 22L. A cylinder body of the width-change cylinder 8A is attached to the upper portion of the vehicle-body central frame 21, a piston rod extends leftward from the cylinder body, and the distal end of the piston rod is attached to the upper portion of the left-vehicle-body side frame 22L.

The width-change cylinder 8B extends and retracts to change the distance between the vehicle-body central frame 21 and the right-vehicle-body side frame 22R. A cylinder body of the width-change cylinder 8B is attached to the upper portion of the vehicle-body central frame 21, at a position forward or rearward (in the present example embodiment, forward) of the cylinder body of the width-change cylinder 8A, a piston rod extends rightward from the cylinder body, and the distal end of the piston rod is attached to the upper portion of the right-vehicle-body side frame 22R.

As a result of the vehicle-body side frames 22 moving toward or away from the vehicle-body central frame 21 due to the extension or retraction of the width-change cylinders 8, the width of the vehicle body 2 is changed in the left-right direction as described above, and the shape of the vehicle body 2 is changed.

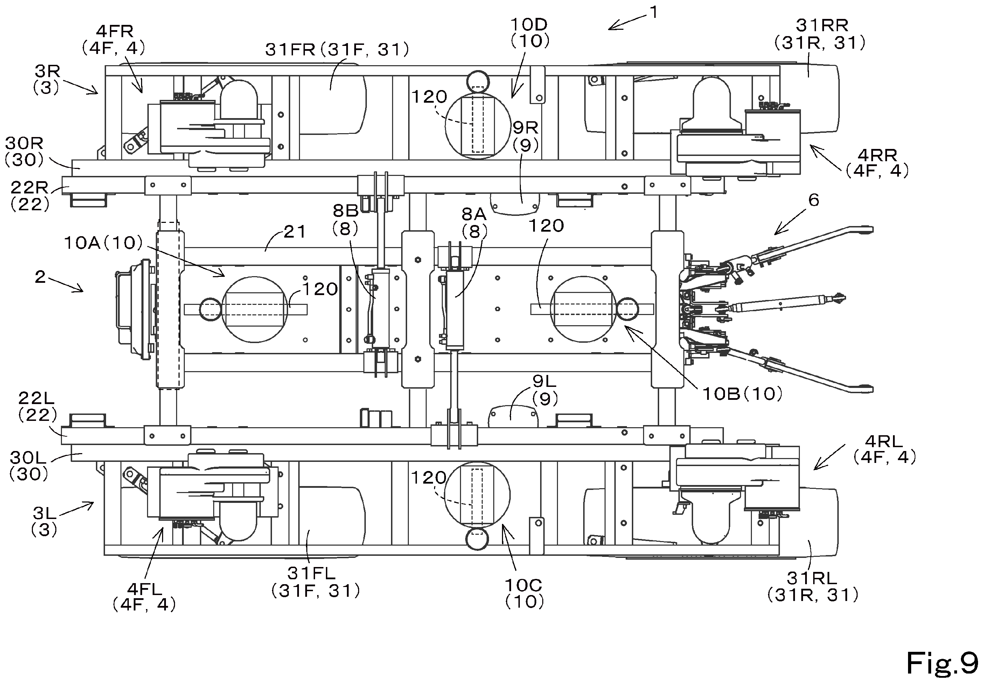

For example, when (the piston rods of) both of the width-change cylinders 8A and 8B are extended, both the left-vehicle-body side frame 22L and the right-vehicle-body side frame 22R move away from the vehicle-body central frame 21, as illustrated in FIG. 9, and thus, the shape of the vehicle body 2 is changed such that both the left portion and the right portion expand.

Along with this, the left traveling structure 3L connected to the left-vehicle-body side frame 22L and the right traveling structure 3R connected to the right-vehicle-body side frame 22R move away from each other in the left-right direction, and thus the distance in the left-right direction between the left traveling structure 3L and the right traveling structure 3R and the vehicle width, which is the distance between the left and right wheels 31 corresponding to the aforementioned distance, are increased.

Note that, when the shape of the vehicle body 2 is changed to increase the vehicle width, there is no need to synchronously extend or retract the left-vehicle-body side frame 22L and the right-vehicle-body side frame 22R. Only one of the left-vehicle-body side frame 22L and the right-vehicle-body side frame 22R may be moved by extending or retracting only one of the width-change cylinders 8A and 8B.

The width-change cylinders 8, serving as a vehicle-body-shape changer for changing the width of the vehicle body 2 in the left-right direction, may have any structure, such as hydraulic cylinders, air cylinders, or electric cylinders, as long as they function as the vehicle-body-shape changer 80.

Furthermore, the vehicle-body-shape changer 80 does not need to have a structure including a cylinder, such as the width-change cylinder 8, as long as it has a function of changing the width of the vehicle body 2 in the left-right direction, and may have, for example, a structure in which the vehicle-body side frame 22 is moved toward or away from the vehicle-body central frame 21 by rotating a screw rod with a motor.

As illustrated in FIG. 8, the overall vehicle body 2 can be moved in the up-down direction (raised and lowered) relative to the left and right traveling structures 3, because of the configuration in which the left-vehicle-body side frame 22L of the vehicle-body frame structure 20 is connected to the left traveling frame 30L of the left traveling structure 3L and the right-vehicle-body side frame 22R is connected to the right traveling frame 30R of the right traveling structure 3R so as to be relatively movable in the up-down direction via a plurality of mast mechanisms 7 (see FIG. 6, etc.) provided between the vehicle body 2 (the vehicle-body side frames 22) and the traveling structures 3 (the traveling frames 30).

As illustrated in FIGS. 6, 8 and the like, the working vehicle 1 includes, as an actuator (hydraulic actuator) for raising and lowering the vehicle body 2, that is, as a vehicle-body mover 90 (see FIG. 7) for moving the vehicle body 2 relative to the left and right traveling structures 3, a pair of left and right vehicle-body raising/lowering cylinders 9, namely, a left-vehicle-body raising/lowering cylinder 9L and a right-vehicle-body raising/lowering cylinder 9R.

The cylinder bottoms, which are the upper ends of the vehicle-body raising/lowering cylinders 9 (the left-vehicle-body raising/lowering cylinder 9L and the right-vehicle-body raising/lowering cylinder 9R), are connected to the upper portion of the vehicle-body side frames 22 (the left-vehicle-body side frame 22L and the right-vehicle-body side frame 22R). The piston rod heads, which are the lower ends of the vehicle-body raising/lowering cylinders 9, are supported by brackets or the like projecting inward from the vehicle-inner-side ends of the traveling frames 30 (the left traveling frame 30L and the right traveling frame 30R).

Under normal conditions, the piston rods of the left-vehicle-body raising/lowering cylinder 9L and the right-vehicle-body raising/lowering cylinder 9R are retracted, and the vehicle body 2 is located at the lowest position in the movement range in the up-down direction thereof, as illustrated in FIGS. 1 to 5, and the like. When the piston rods of the left-vehicle-body raising/lowering cylinder 9L and the right-vehicle-body raising/lowering cylinder 9R are extended simultaneously by the same stroke, the entire vehicle body 2 rises. More specifically, when the piston rods of the left-vehicle-body raising/lowering cylinder 9L and the right-vehicle-body raising/lowering cylinder 9R are extended, the vehicle body 2 moves upward relative to the left and right traveling structures 3 while being guided by the mast mechanisms 7.

The inclination in the left-right direction of the vehicle body 2 may be adjusted by differentially extending and retracting the left-vehicle-body raising/lowering cylinder 9L and the right-vehicle-body raising/lowering cylinder 9R. For example, when the left traveling structure 3L becomes lower than the right traveling structure 3R due to an inclination of the ground downward to the left, and thus, the vehicle body 2 is inclined downward to the left, only the left-vehicle-body raising/lowering cylinder 9L may be extended to move the left portion of the vehicle body 2 upward relative to the left traveling structure 3L, so that the vehicle body 2 is maintained horizontal in the left-right direction.

The vehicle-body raising/lowering cylinders 9 do not necessarily have to be provided as a pair, and the number thereof and the position thereof in the vehicle body 2 are not limited. The actuator for moving the vehicle body 2 in the up-down direction is not limited to an extension/retraction actuator, such as the vehicle-body raising/lowering cylinder 9. For example, the vehicle body 2 may be configured to move in the up-down direction by means of the rotation of an electric motor.

In the present example embodiment, as described above, the width-change cylinders 8, serving as the vehicle-body-shape changer 80, and the vehicle-body raising/lowering cylinders 9, serving as the vehicle-body mover 90, are hydraulic actuators, and the extension and retraction thereof are controlled when their respective control valves in a control valve assembly 27 are controlled by the controller 15.

In FIG. 7, the width-change cylinder 8 and the vehicle-body raising/lowering cylinder 9 respectively mean the width-change cylinders 8A and 8B and the vehicle-body raising/lowering cylinders 9L and 9R, and the controller 15 is capable of individually controlling the extension and retraction thereof.

As illustrated in FIGS. 4, 8 and the like, a battery (center battery) 50 is accommodated in the front body case 24. In consideration of a weight balance of the battery 50, which is a heavy object, in the entire working vehicle 1, or for other reasons (for example, in relation to a layout of devices in the vehicle body 2), the front body case 24 is movable in the front-rear direction relative to the vehicle-body central frame 21 (vehicle-body frame structure 20). In other words, the shape of the vehicle body 2 is changed also by moving the front body case 24 in the front-rear direction relative to the vehicle-body central frame 21.

In order to move the front body case 24 in the front-rear direction relative to the vehicle-body central frame 21, a battery moving actuator 81, which is, for example, a hydraulic cylinder, may be provided as the vehicle-body-shape changer 80 (see FIG. 7). Alternatively, without providing such a vehicle-body-shape changer, an operator may directly push or pull the front body case 24 by hand to move the front body case 24 in the front-rear direction relative to the vehicle-body central frame 21.

An air-temperature adjuster (air conditioner assembly) 51 is attached to the front end surface of the front body case 24 so as to protrude forward, and a radiator 52 is provided immediately in front of the air-temperature adjuster 51. A radiator fan 52a is provided at the front end of the radiator 52. Specifically, an air-cooling device and a water-cooling device are provided immediately in front of the front body case 24.

The air-temperature adjuster 51 and the radiator fan 52a of the radiator 52 can be actuated by power supplied from the battery 50.

A bracket 25 is suspended from the vehicle-body central frame 21 at a position rearward of the front body case 24, which accommodates the battery (center battery) 50 as described above. A rear body case (PTO case) 26 is suspended from the lower end of the bracket 25.

In this manner, the rear body case 26 is positioned rearward of the front body case 24 and is supported by the vehicle-body frame structure 20 of the vehicle body 2 via the bracket 25.

An electric motor 53, serving as a prime mover for a working system, and an inverter 54 (see FIG. 7) are accommodated in the rear body case 26. The PTO shaft 5 is supported in the rear body case 26. As illustrated in FIG. 5, the PTO shaft 5 protrudes rearward from the rear end of the rear body case 26, which constitutes the rear end of the vehicle body 2.

The electric motor 53 is driven by power obtained from the center battery 50, and drives the PTO shaft 5 with the output of the electric motor 53. The inverter 54 converts a direct current from the center battery 50 into an alternating current, and supplies the alternating current to the electric motor 53 at a preset voltage and/or frequency.

As illustrated in FIG. 7, when the set value of the voltage and/or frequency of the inverter 54 is controlled by the controller 15, the output rotational speed and/or torque of the electric motor 53 is controlled, and thus the rotational speed and/or torque of the PTO shaft 5 is controlled.

A transmission mechanism for transmitting the output of the electric motor 53 to the PTO shaft 5 may be provided in the rear body case 26. This transmission mechanism may be one including a gear, an endless belt, or another structure. Furthermore, this transmission mechanism may be a stepped or stepless speed change mechanism. Furthermore, this transmission mechanism may be provided with a clutch, a braking device, and the like.

As illustrated in FIG. 5 and the like, a pair of left and right lower link brackets 26a are provided at a lower left corner portion and a lower right corner portion of the rear end of the rear body case 26. Furthermore, a top link bracket 26b is provided at an intermediate position in the left-right direction at an upper portion of the rear end surface of the rear body case 26.

When the linkage 6, which is a three-point linkage, is attached to the vehicle body 2, the front ends of the left and right lower links 6a are attached to the left and right lower link brackets 26a, and the front end of the top link 6b is attached to the top link bracket 26b.

Furthermore, a lift arm base 26c that rotatably supports a pivot shaft extending in the left-right direction is provided on the upper end surface of the rear body case 26, and a pair of left and right lift cylinder brackets 26d are provided on the lower portion of the rear end surface of the rear body case 26.

When the linkage 6, which is a three-point linkage, is attached to the rear body case 26, the front ends of a pair of left and right lift arms 60 are attached to the left and right ends of the pivot shaft supported by the lift arm base 26c. Thus, the left and right lift arms 60 are pivotally supported by the lift arm base 26c so as to be integrally rotatable.

Lift cylinders 61 are interposed between the left lift arm 60 and the left lift cylinder bracket 26d and between the right lift arm 60 and the right lift cylinder bracket 26d.

The left and right lift cylinders 61 are configured to extend or retract synchronously, and the left and right lift arms 60 rotate integrally about the pivot shaft at the front ends by the extension or retraction of the left and right lift cylinders 61.

Furthermore, one of the left and right lift arms 60 and a corresponding lower link 6a are connected via a lift rod 62 having a fixed length, while the other of the left and right lift arms 60 and a corresponding lower link 6a are connected via a posture adjustment cylinder 63 that is capable of extension and retraction.

Because the left and right lower links 6a are connected to the left and right lift arms 60 via the lift rod 62 and the posture adjustment cylinder 63 in this manner, the rear ends of the left and right lower links 6a move in the up-down direction, following the movement of the rear ends of the left and right lift arms 60 in the up-down direction caused by extension or retraction of the left and right lift cylinders 61. Thus, the working device 200 attached to the rear ends of the left and right lower links 6a and the rear end of the top link 6b in the linkage 6 moves up or down (is raised or lowered).

Furthermore, by adjusting the difference between the distance from the rear end of the left lift arm 60 to the rear end of the left lower link 6a and the distance from the rear end of the right lift arm 60 to the rear end of the right lower link 6a by means of the extension or retraction of the posture adjustment cylinder 63, the inclination angle in the left-right direction of the working device 200 attached to the linkage 6 is adjusted.

This configuration enables adjustment of the distance between the lift arm 60 and the lower link 6a by means of the extension or retraction of the posture adjustment cylinder 63, even if the working device 200 performing agricultural work tends to incline rightward or leftward due to the inclination of the agricultural field. Thus, the working device 200 is held in a horizontal state in the left-right direction, and a good ridge having no inclination in the left-right direction can be formed in the work trace of the working device 200, which is a ridge former, for example.

As described above, the working device 200 can be coupled to the linkage 6 attached to the rear of the rear body case 26 (the rear portion of the vehicle body 2). Furthermore, the working device 200 coupled to the rear of the vehicle body 2 via the linkage 6 can receive a driving force from the PTO shaft 5 protruding from the rear end surface of the rear body case 26.

Examples of the working device 200 include a device that performs work related to agriculture (agricultural work), a device that performs work related to civil engineering, a device that performs work related to construction, and a device that performs work related to transportation, but the working device 200 is not limited to these working devices. In the example embodiment described below, the working device 200 is a device that performs agricultural work.

Examples of the working device 200 that performs agricultural work include a spreader that spreads materials to be spread, such as fertilizer or agricultural chemicals, a seeder that sows seeds, a cultivator that cultivates soil, a plow that plows soil, a weeder that performs weeding, and a hiller that forms hills. However, the working device 200 may be any device used for agricultural work, and the type thereof is not particularly limited.

Furthermore, when the working device 200 is an electric working device, the working device 200 may be driven by power taken out from the battery 50 via a power line to the outside of the vehicle body 2, instead of being driven by power taken out from the PTO shaft 5.

The working device 200 may be coupled to the working vehicle 1 in a state of being positioned at a side of or forward of the vehicle body. Furthermore, for example, when the working device 200 is positioned forward of the working vehicle 1, the linkage 6 may be attached to, for example, the front body case 24, and the working device 200 positioned forward of the working vehicle 1 may be coupled to the working vehicle 1 via the linkage 6 attached to the front portion of the vehicle body 2.

Furthermore, in addition to the PTO shaft 5 provided at the rear portion of the vehicle body 2 or instead of the PTO shaft 5, for example, a front PTO shaft may be provided so as to extend forward from the front body case 24, and the working device 200 forward of the working vehicle 1 may be driven by the front PTO shaft. An example of such a forward-mounted agricultural working device (implement) 200 is a combine unit including a reaper, a thresher, a separator, and the like of a combine in combination.

Furthermore, the above-described lower link brackets 26a, top link bracket 26b, and lift cylinder brackets 26d may be removable from the rear end of the rear body case 26, and may be selected according to the configuration of the linkage 6 attached to the rear body case 26 and attached to the rear end of the rear body case 26.

Furthermore, an attachment portion to which the linkage 6 can be attached may also be provided at a portion other than the rear body case 26 of the vehicle body 2, for example, the front body case 24, to enable the working device 200 to be coupled to the working vehicle 1 forward of the vehicle body 2.

For example, when the working device 200 is attached to a portion other than the rear of the rear body case 26, such as at a position forward of the front body case 24, the above-described brackets 26a, 26b, 26d, and the like may be attached to a portion prepared for attaching the linkage 6 at that position.

Furthermore, the working device 200 may be mounted on, for example, an upper portion of the vehicle-body frame structure 20 of the vehicle body 2 of the working vehicle 1 without using the linkage 6. In this case, a PTO shaft for transmitting driving force to the working device 200 may be provided so as to protrude upward from the upper portion of the vehicle-body frame structure 20 (for example, the vehicle-body central frame 21).

The working vehicle 1 includes hydraulic actuators, such as the width-change cylinders 8 and the vehicle-body raising/lowering cylinders 9 provided in the vehicle body 2 as described above, and the steering cylinders 35 provided in the traveling structures 3. Furthermore, the linkage 6 attached to the vehicle body 2 may include hydraulic actuators such as the above-described lift cylinders 61 and the posture adjustment cylinder 63.

To control the actuation of these hydraulic actuators, at least one control valve assembly 27 is attached to the rear end surface of the bracket 25, the upper end of the lift arm base 26c, or the like outside the rear body case 26.

Each control valve assembly 27 includes a built-in control valve for controlling the flow of the hydraulic fluid between a hydraulic pump 55 and a hydraulic actuator to be hydraulically controlled, and is provided with ports for fluidly connecting the control valve to the hydraulic pump 55, the hydraulic actuator, and the like via oil pipes and the like.

Note that control valves for hydraulically controlling different hydraulic actuators may be combined to constitute one control valve assembly 27. The control valve does not necessarily have to be provided outside the rear body case 26 as described above, and may be provided inside the rear body case 26.

Furthermore, when the control valve of the control valve assembly 27 is a solenoid valve or the like, the control valve assembly 27 may be electrically connected to the controller 15 or the like by an electric wire or the like.

Instead of the battery 50, an internal combustion engine (engine) may be provided in the front body case 24 or the like. The hydraulic pump 55 for the above-described hydraulic actuators may be driven by the engine output, and the PTO shaft 5 may be driven by transmitting the engine output to the PTO shaft 5.

As described above, the front body case 24 moves in the front-rear direction relative to the vehicle-body central frame 21, and the vehicle-body side frames 22 at the left and right sides move in the left-right direction relative to the vehicle-body central frame 21. This makes it possible to ''change the shape'' of the vehicle body 2. The width-change cylinders 8 function as a vehicle-body-shape changer (actuator) for changing the shape of the vehicle body 2.

Furthermore, the vehicle body 2 is ''movable'' in the up-down direction relative to the left and right traveling structures 3. The vehicle-body raising/lowering cylinders 9 function as a vehicle-body mover (actuator) for moving the vehicle body 2.

Furthermore, the linkage 6 can be attached to the vehicle body 2, and a state in which the working device 200 is coupled to the vehicle body 2 via the linkage 6 and a state in which the working device 200 is not coupled to the vehicle body 2 can be switched.

Hereinbelow, the ''change in the shape'' and the ''movement'' of the vehicle body 2 and ''switching between a state in which the working device 200 is coupled and a state in which the working device 200 is not coupled'', as described above, are collectively referred to as a change in the state of the vehicle body 2.

As illustrated in FIG. 7, an overall device for changing the state of the vehicle body 2 will be defined as a vehicle-body-state changer 100, the device including: the vehicle-body-shape changer 80 including the width-change cylinders 8 and the battery moving actuator 81; the vehicle-body mover 90 including the vehicle-body raising/lowering cylinders 9; and the linkage 6 via which the working device 200 can be coupled to the vehicle body and which includes the lift cylinders 61 for raising/lowering the working device 200 and the posture adjustment cylinder 63 for adjusting the posture of the working device 200. The controller 15 controls the devices included in the vehicle-body-state changer 100.

As illustrated in FIG. 7, assuming that the vehicle-body-shape changer 80 for changing the shape of the vehicle body 2 includes the width-change cylinder 8 and the battery moving actuator 81, and that the vehicle-body mover 90 for moving the vehicle body 2 (in the up-down direction) includes the vehicle-body raising/lowering cylinders 9, the controller 15 controls the vehicle-body-state changer 100 including the vehicle-body-shape changer 80, the vehicle-body mover 90, and the linkage 6 that switches between a state in which the working device 200 is coupled to the vehicle body 2 and a state in which the working device 200 is not coupled to the vehicle body 2.

Next, the configuration of the control system in the working vehicle 1 will be described with reference to FIG. 7. As illustrated in FIG. 7, the working vehicle 1 includes a position detector 11. The position detector 11 is capable of detecting the position (measured position information including latitude and longitude) of the vehicle body 2 using satellite positioning systems (positioning satellites), such as D-GPS, GPS, GLONASS, BeiDou, Galileo, and QZSS. Specifically, the position detector 11 receives satellite signals (positions of positioning satellites, transmission times, correction information, etc.) transmitted from the positioning satellites, and detects the position (for example, latitude and longitude) of the vehicle body 2 based on the satellite signals.

The position detector 11 includes a receiver 12 and an inertial measurement unit (IMU) 13. The receiver 12 is a device that includes an antenna or the like and receives satellite signals transmitted from positioning satellites, and is attached to the vehicle body 2. The inertial measurement unit 13 includes an acceleration sensor that detects acceleration, and a gyroscope sensor that detects angular velocity. The inertial measurement unit 13 is attached to the vehicle body 2. The inertial measurement unit 13 enables detection of a roll angle, a pitch angle, a yaw angle, and the like of the vehicle body 2. Multiple position detectors 11 may be provided to detect the yaw angle.

As illustrated in FIG. 7, the working vehicle 1 includes a communication device 14. The communication device 14 includes a communication circuit for communication via an in-vehicle network and a wireless communication circuit for wireless communication. The wireless communication circuit can perform wireless communication directly or indirectly with an external device using Wireless Fidelity (Wi-Fi) (registered trademark) of the IEEE 802.11 series, Bluetooth (registered trademark) Low Energy (BLE), Low Power, Wide Area (LPWA), Low-Power Wide-Area Network (LPWAN), and the like.

As another example, a communication circuit wirelessly communicable with an external device via, for example, a cellular communication network, a data communication network, or the like may be provided in the communication device 14. Examples of the external device include a personal computer, a smartphone, a tablet computer, a PDA, and a server.

As illustrated in FIGS. 1 to 6, and the like, the working vehicle 1 includes at least one situation detector 10 configured to detect the situation around the working vehicle 1, so that, for example, the working vehicle 1 starts after confirming safety therearound.

In the present example embodiment, the situation detector 10 includes four situation detectors 10A, 10B, 10C, and 10D. The front situation detector 10A is provided at the front upper portion of the vehicle body 2, the rear situation detector 10B is provided at the rear upper portion of the vehicle body 2, the left situation detector 10C is provided at the upper portion of the left traveling structure 3L, and the right situation detector 10D is provided at the upper portion of the right traveling structure 3R. The situation detectors 10C and 10D are located above the battery case 36. The situation detectors 10C and 10D are located at substantially intermediate positions of the traveling frames 30. The situation detector 10C and the situation detector 10D are located at substantially the same position in the front-rear direction. The distance from the front end of the vehicle-body central frame 21 to the situation detector 10A and the distance from the rear end of the vehicle-body central frame 21 to the situation detector 10B are substantially the same. The situation detector 10A and the situation detector 10B are provided at positions substantially the same distance from the respective ends of the vehicle-body central frame 21 in the front-rear direction.

The situation detectors 10 each include a camera (imaging device) 10a, a sensor 10b, and a calculator 10c (see FIG. 7). In the present example embodiment, the situation detector 10 includes both the camera 10a and the sensor 10b, but may include only one of them.

The camera 10a may be, for example, a charge-coupled device (CCD) camera including a CCD image sensor, or a complementary metal oxide semiconductor (CMOS) camera including a CMOS image sensor.

The camera 10a captures an image of the surrounding areas of the working vehicle 1 and generates an image signal. The calculator 10c includes a computer including a signal processing circuit for processing the generated image signal. The signal processing circuit detects the state of a target (the presence/absence of the target, the position of the target, the type of the target, the size of the target, and the like) based on the image signal output from the camera 10a.

The sensor 10b is an optical sensor and uses, for example, light detection and ranging (LiDAR).

The LiDAR (laser sensor) emits pulsed measurement light (laser light) millions of times per second from a light source such as a laser diode, and the measurement light is reflected by a rotating mirror and scanned in a horizontal direction or a vertical direction, thus irradiating a predetermined detection range (sensing range).

The LiDAR receives reflected light of the measurement light from a target with a light-receiving element. The signal processing circuit of the calculator 10c detects the state of the target (the presence/absence of the target, the position of the target, the type of the target, the size of the target, and the like) based on a light-receiving signal output from the light-receiving element of the LiDAR.

The signal processing circuit also detects the distance to the target based on the time from when the LiDAR emits the measurement light to when the reflected light is received (time of flight (TOF) method). The method for detecting the distance using the LiDAR is not limited to the TOF method.

The sensor 10b may include both an optical sensor and an acoustic sensor, or may include either one of them.

The acoustic sensor includes, for example, an airborne ultrasonic sensor, such as sonar. The airborne ultrasonic sensor transmits a measurement wave (ultrasonic wave) into a predetermined detection range with a transmitter, and receives, with a receiver, a reflected wave, which is the measurement wave reflected by a target. The signal processing circuit detects the state of the target (the presence/absence of the target, the position of the target, the type of the target, the size of the target, and the like) based on the signal output from the receiver.

Furthermore, the signal processing circuit detects the distance to the target based on the time from when the airborne ultrasonic sensor transmits the measurement wave to when the reflected wave is received (time of flight (TOF) method). The method for detecting the distance using the acoustic sensor is not limited to the TOF method.

The situation detector 10 detects a situation around the working vehicle 1 (the vehicle body 2, the left traveling structure 3L, and the right traveling structure 3R). As the situation around the working vehicle 1, the situation detector 10 detects obstacle information indicating whether there is, near the working vehicle 1, an obstacle or a person that may come into contact with the working vehicle 1.

The situation detector 10 also detects, as the situation around the working vehicle 1, path information, which is information on paths on which the left and right traveling structures 3 can travel. More specifically, path information, which is values related to the paths on which the traveling structures 3 can travel, is detected. The situation detector 10 detects, for example, the width of a traveling path as path information.

The width of the traveling path to be detected by the situation detectors 10 is the width of a target over which the working vehicle 1 is to travel with the left traveling structure 3L and the right traveling structure 3R arranged at both sides of the target. The situation detectors 10 detect, as the width of the traveling path, for example, the width of a ridge formed on the ground or the width of an obstruction on the ground that obstructs travel.

The situation detectors 10 also detect, as the path information, for example, the height of the traveling path. The height of the traveling path detected by the situation detectors 10 is the height of the target over which the vehicle body 2 is to travel with the left traveling structure 3L and the right traveling structure 3R arranged on both sides of the target. The situation detectors 10 detect, as the height of the traveling path, for example, the height of a ridge formed on the ground or the height of an obstruction on the ground that obstructs travel.

The obstruction that obstructs travel includes, for example, a groove or a hole formed in the ground, crops planted in the ground, and an obstacle on the ground (for example, a stone or an artificial installation). Typically, the situation detectors 10 can detect, as the height of the obstruction, the height of crops planted in the ground.

The height of crops detected by the situation detectors 10 is the height from the ground with which the wheels 31 of the traveling structures 3 are in contact to the upper ends of the crops. For example, when crops are planted on a ridge, the wheels 31 of the traveling structures 3 are in contact not with the ridge but with the ground between ridges. Thus, the height of the crops detected by the situation detectors 10 corresponds to ''the sum of the height of the crops and the height of the ridge''.

The situation detectors 10 may detect, as the situation around the working vehicle 1, the inclination of the ground in the left-right direction. In this case, the situation detectors 10 can detect, as the situation around the working vehicle 1, the height of the ground on which the left traveling structure 3L travels and the height of the ground on which the right traveling structure 3R travels. Hence, the situation detector 10 may be mounted on each of the left traveling frame 30L and the right traveling frame 30R.

Furthermore, in this case, for example, inclination sensors for detecting the inclination of the working vehicle 1 (vehicle body 2) in the left-right direction may be used as the situation detectors 10. Alternatively, it is possible to configure such that the cameras 10a are used as the situation detectors 10, and the calculators 10c detect the inclination of the ground in the left-right direction based on the images captured by the cameras 10a.

Furthermore, the working vehicle 1 includes, in addition to the situation detectors 10 for detecting the situation around the working vehicle 1, a detector for detecting the state of the working vehicle 1.

FIG. 7 illustrates, as detectors for detecting the state of the working vehicle 1, a distance detector 16 for detecting the distance between the left traveling structure 3L and the right traveling structure 3R in the left-right direction, which corresponds to the vehicle width that is the distance between the left and right wheels 31, and a vehicle height detector 17 for detecting the vehicle height that is the distance in the up-down direction from the ground contact points of the wheels 31 to the lowest portion of the vehicle body 2. Besides these detectors, a rotational speed detector for detecting a rotational speed of the electric motor 53, a rotational speed detector for detecting a rotational speed of the wheels 31, and the like may be provided.

As illustrated in FIG. 7, the controller 15 provided in the working vehicle 1 is a device that performs various controls of the working vehicle 1. The controller 15 includes an arithmetic unit (CPU or the like) and a storage unit (memory and/or storage) (RAM, ROM, or the like). The storage unit may include an external memory provided outside the controller 15. The controller 15 is connected to various devices and mechanisms illustrated in FIG. 7 via an in-vehicle LAN (vehicle-mounted network) such as a controller area network (CAN) or a communication line.

In the controller 15, the arithmetic unit executes various control programs stored in the storage unit, thus controlling the operations of the various devices and mechanisms communicably connected with the controller 15.

The controller 15 includes controllers such as an automatic driving controller 15A, a distance change controller 15B, a height change controller 15C, and a position change controller 15D. The functions of these controllers are realized when the arithmetic unit executes predetermined control programs stored in the storage unit.

The automatic driving controller 15A of the controller 15 controls automatic drive of the working vehicle 1. The automatic driving controller 15A is capable of executing line-following automatic driving control and autonomous automatic driving control.

In the line-following automatic driving control, in order for the working vehicle 1 (vehicle body 2) to move along a preset planned travel line, the automatic driving controller 15A controls the inverter 38 for controlling the output of the traveling motor 33 of each wheel assembly 4 to control the rotational speed of the corresponding wheel 31, and controls each control valve in the control valve assembly 27 for controlling the extension amount of the steering cylinder 35 of each wheel assembly 4 to control the orientation (steering angle) of the corresponding wheel 31.

In the autonomous automatic driving control, the automatic driving controller 15A sets a traveling direction (steering direction), a vehicle speed (speed), and the like of the vehicle body 2 based on the result of detecting the position of the working vehicle 1 (vehicle body 2) with the position detector 11. In order for the thus-set control angle (direction) and vehicle speed to be achieved, the automatic driving controller 15A controls the inverter 38 for controlling the output of the traveling motor 33 of each wheel assembly 4 to control the rotational speed of the corresponding wheel 31, and controls the control valve assembly 27 (the control valve) for controlling the extension amount of the steering cylinder 35 of each wheel assembly 4 to control the orientation (steering angle) of the corresponding wheel 31.

The system may be configured such that the line-following automatic driving control and the autonomous automatic driving control can be switched by a switch or the like. Alternatively, the automatic driving controller 15A may be configured to be capable of executing only one of the line-following automatic driving control and the autonomous automatic driving control. The configuration of the automatic driving controller 15A is not limited to the above configuration.

Furthermore, the automatic driving controller 15A determines, based on the obstacle information obtained by sensing the surrounding areas of the working vehicle 1 (by detecting the target) with the situation detectors 10, whether to start the working vehicle 1 that is stopped, whether to stop the working vehicle 1 that is traveling, whether to change the traveling direction by steering, whether to stop driving of the working device 200 during work and/or whether to raise the working device 200, and the like, and controls the inverters 38 for controlling the output of the traveling motors 33 and the steering cylinders 35 in the traveling structures 3, or the inverter 54 for controlling the output of the electric motor 53, and the like, so as to realize the determined state.

As described above, because the controller 15 includes the automatic driving controller 15A, the working vehicle 1 is capable of automatically traveling without an operator on the vehicle (unmanned traveling). Hence, the working vehicle 1 of the illustrated example embodiment does not include an operator's seat for an operator.

However, the working vehicle 1 may be a vehicle that automatically travels with an operator on the vehicle. Alternatively, the working vehicle 1 may be a vehicle that is driven by an operator on the vehicle. When the working vehicle 1 is a vehicle that is driven by an operator on the vehicle, an operator's seat is provided in the vehicle body 2.

The distance change controller 15B of the controller 15 controls the control valve assembly 27 (the control valve) for controlling the extension/retraction of the width-change cylinder 8A and/or the width-change cylinder 8B, serving as the vehicle-body-shape changer, such that the distance between the left traveling structure 3L and the right traveling structure 3R corresponds to the detected width of the traveling path, that is, such that the left and right wheels 31 are correctly positioned between ridges, based on, for example, the information on the width of the traveling path included in the path information acquired by detection with the situation detectors 10 and the information on the distance between the left traveling structure 3L and the right traveling structure 3R detected by the distance detector 16.

The height change controller 15C of the controller 15 controls the control valve assembly 27 (control valve) for controlling the extension/retraction of the vehicle-body raising/lowering cylinders 9, serving as the vehicle-body mover, such that the vehicle height, which is the distance in the up-down direction from the ground contact points of the wheels 31 to the lower end of the vehicle body 2, corresponds to the detected height of the traveling path, that is, such that the vehicle body 2 passes over the crops or the like growing on the traveling path, based on the information on the height of the traveling path included in the path information acquired by the detection with the situation detectors 10 and the information on the vehicle height detected by the vehicle height detector 17.

In addition, the height change controller 15C of the controller 15 controls the control valve assembly 27 (control valve) for controlling the extension/retraction of the left-vehicle-body raising/lowering cylinder 9L and the right-vehicle-body raising/lowering cylinder 9R so as to adjust the difference in the extension amount of the piston rod between the left-vehicle-body raising/lowering cylinder 9L and the right-vehicle-body raising/lowering cylinder 9R, serving as the vehicle-body mover, to adjust the inclination of the vehicle body 2 in the left-right direction, based on, for example, the information on the inclination of the ground in the left-right direction acquired by the detection with the situation detectors 10.

Furthermore, the position change controller 15D of the controller 15 may measure a slip ratio of the front wheels 31F and the rear wheels 31R based on, for example, a detection result obtained by the rotational speed detector for detecting the rotational speed of the wheels 31, and, if, for example, the slip ratio of the front wheels 31F is high, the position change controller 15D may cause an external device to display a warning for moving the front body case 24 forward via the communication device 14.

Furthermore, when the working vehicle 1 includes, as illustrated in FIG. 7, the battery moving actuator 81 (vehicle-body-shape changer 80) for moving the front body case 24 in the front-rear direction, the position change controller 15D actuates the battery moving actuator 81 so as to move the front body case 24 (when the battery moving actuator 81 is a hydraulic actuator, the corresponding control valve is controlled).

Next, a structure for adjusting the direction, position, and the like of the detection by the situation detectors 10 in response to a change in the state of the vehicle body 2 will be described with reference to FIGS. 7 and 10 to 15.

In the present example embodiment, the orientations of the cameras 10a and the sensors 10b and the positions of the situation detectors 10 are determined to enable the front situation detector 10A, the rear situation detector 10B, the left situation detector 10C, and the right situation detector 10D to respectively capture an image of and detect the area forward of the working vehicle 1, the area rearward of the working vehicle 1, the area at the left side of the working vehicle 1, and the area at the right side of the working vehicle 1, generally.

Initial states of these orientations, positions, and the like of the situation detectors 10 may be set by the controller 15. For example, a state in which the vehicle body 2 has a minimum width in the left-right direction, in which the width-change cylinders 8 are retracted, and a state in which the vehicle body 2 is at the lowest position in movement in the up-down direction, in which the vehicle-body raising/lowering cylinders 9 are retracted, are assumed to be an initial state of the vehicle body 2. Based on an assumption that the vehicle body 2 is in the initial state, initial states of the orientations of the situation detectors 10, the angles of the cameras 10a and the like, and the positions of the situation detectors 10 may be set. Alternatively, a state in which the working device 200 is not attached, or a state in which the battery 50 at the center is not moved forward may be set as the initial state of the vehicle body 2.

Here, the situation detectors 10 are configured to be movable in a horizontal direction. In order to guide and support the situation detectors 10 during the movement, as illustrated in FIG. 6, rails 120 may be provided on the upper portion of the vehicle body 2 or the traveling structures 3 to which the situation detectors 10 are attached, and rollers or the like provided below the situation detectors 10 may be placed on the rails 120.

Although FIG. 6 illustrates the rails 120 extending in the front-rear direction for the front situation detector 10A and the rear situation detector 10B and the rails 120 extending in the left-right direction for the left situation detector 10C and the right situation detector 10D, the directions of the rails 120 may be determined corresponding to the situation detectors 10 and are not limited. For example, the directions of the rails are not limited to the front-rear and left-right directions, and may be directions oblique to the front-rear direction and/or the left-right direction. Furthermore, a plurality of rails 120 may be provided to enable movement in multiple directions instead of only one direction.

Although an operator may hold and move the situation detectors 10, in the present example embodiment, as illustrated in FIG. 7, the situation detectors 10 may be moved by a position changer (actuator) 111 controlled by the controller 15.

The position changer 111 may be an extension/retraction actuator, such as a cylinder, or a rotary actuator, such as a motor, and the actuator may be electric, hydraulic, or of another configuration.

Furthermore, the angle of the camera 10a and/or the sensor 10b of each situation detector 10 is changeable in the horizontal direction and the up-down direction, so that the image-capturing direction and the detection direction can be changed both in the up-down direction and in the left-right direction.

Although the angle may be changed by an operator manually moving the camera 10a or the like, in the present example embodiment, as illustrated in FIG. 7, the angle may be changed by an angle changer (actuator) 112 controlled by the controller 15.

The angle changer 112 may be an extension/retraction actuator, such as a cylinder, or a rotary actuator, such as a motor, and may be electric, hydraulic, or of another configuration.

Furthermore, in the situation detector 10, for example, a base supporting the camera 10a and the sensor 10b may be capable of extension and retraction in the up-down direction, and a height changer 113 for moving the base up and down may be provided, so that the camera 10a and the sensor 10b can move up and down. As in the angle changer 112, the height changer 113 may have any configuration.

The height changer 113 may be configured to operate in conjunction with actuation of the angle changer 112 or the like. Specifically, if, for example, the camera 10a is rotated downward by the angle changer 112, an image of a low-height object (person) present near the vehicle body 2 or the like can be captured, but an end of the vehicle body 2 or the like may enter the field of view. To prevent an end of the vehicle body 2 or the like from entering the field of view, the height changer 113 may increase the position of the camera 10a in the up-down direction in conjunction with the angle changer 112 causing the camera 10a to be oriented downward.

FIG. 7 illustrates only one detection adjuster 110 including the position changer 111, the angle changer 112, and the height changer 113. In the example embodiment including four situation detectors 10, as illustrated in FIG. 1 and the like, the detection adjuster 110 corresponds to (defines) each of the situation detectors 10A, 10B, 10C, and 10D. The controller 15 individually controls the detection adjuster 110 provided for each of the situation detectors 10.

Here, in the working vehicle 1 according to the present example embodiment, as described above, the state of the vehicle body 2 is changeable. The controller 15 ''changes the shape of the vehicle body 2'', ''moves the vehicle body 2'', or realizes a state in which the working device 200 is coupled to the vehicle body 2 or a state in which the working device 200 is not coupled to the vehicle body 2 by using the devices included in the vehicle-body-state changer 100.

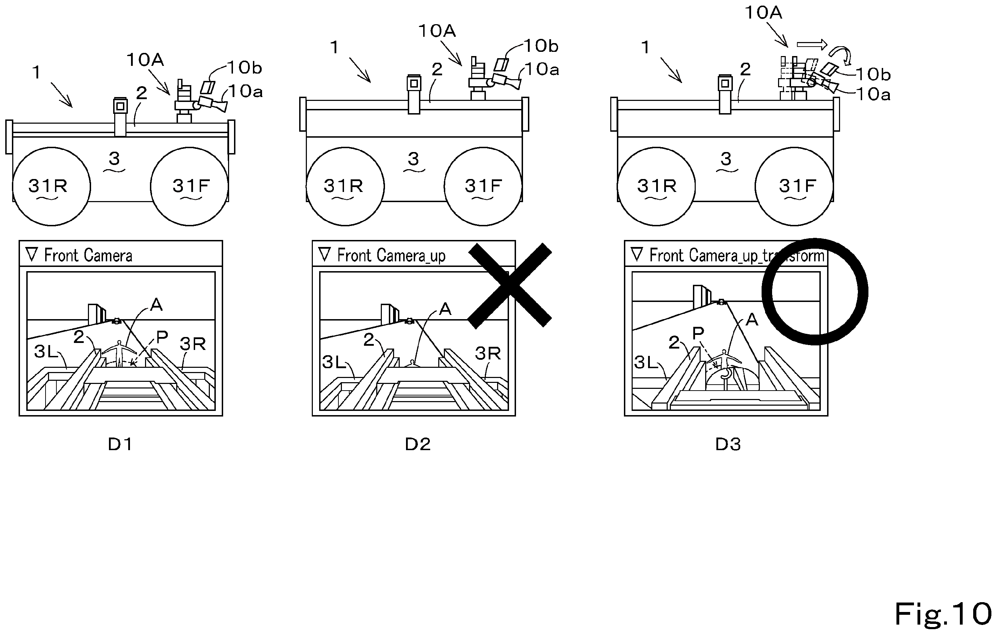

As illustrated in FIG. 10, a screen D1 in FIG. 10 displays a scene forward of the working vehicle 1 captured by the camera 10a of the front situation detector 10A when the vehicle body 2 is at a normal height, that is, when the vehicle body 2 is not raised.

At this time, the camera 10a can detect an object (person A) located at a position P immediately in front of the working vehicle 1, and can display the object (person A) on the screen D1. Meanwhile, when the vehicle body 2 is raised with the camera 10a oriented in the same direction, the camera 10a and the front end of the vehicle body 2 captured in an image by the camera 10a become higher together. Thus, as shown in a screen D2, the detected object (person A) is smaller than that in the screen D1. In other words, the detection range for the object (person A) is smaller than that in the screen D1.

In the working vehicle 1 according to the present example embodiment, the detection adjuster 110 is controlled in response to such a change in the state of the vehicle body 2 caused by the vehicle-body-state changer 100. Specifically, FIG. 10 illustrates a situation in which, as a result of the controller 15 controlling the detection adjuster 110, an object (person A) located at a position P (detection position P) an image of which could be captured by the camera 10a before the change in the height of the vehicle body 2 (before the change in the state), as illustrated in the screen D1, can be detected after the change in the height of the vehicle body 2 (after the change in the state), as shown in a screen D3.

The detection adjuster 110 achieves a match (alignment) between a detection position before the change in the state of the vehicle body 2 and a detection position after the change in the state of the vehicle body 2. Control of the detection adjuster 110 according to modes of change in the state of the vehicle body 2 will be described with reference to FIGS. 10 to 14.

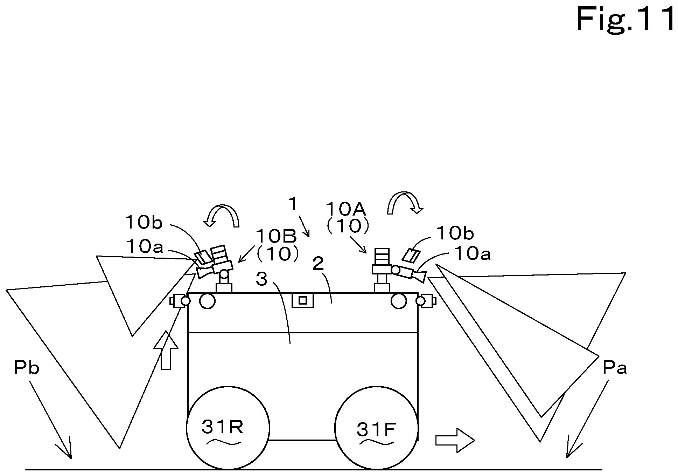

First, the detection position matching (alignment) of the situation detector 10 when, among changes in the state of the vehicle body 2, the height of the vehicle body 2 is changed, that is, when the vehicle body 2 is moved up or down by the extension or retraction of the vehicle-body raising/lowering cylinders 9, serving as the vehicle-body mover 90, will be described with reference to FIGS. 10 and 11.

Of the three schematic views of the working vehicle 1 in FIG. 10, the rightmost view illustrates a state in which, as a result of the front situation detector 10A being moved forward by the position changer 111 in response to raising of the vehicle body 2 and the camera 10a being rotated downward by the angle changer 112, an object (person A) located at a detection position P that can be detected when the vehicle body 2 is at a normal height before the vehicle body 2 is raised (before the change in the state) becomes detectable after the vehicle body 2 is raised (after the change in the state).

Specifically, the controller 15 calculates a distance by which the front situation detector 10A is to be moved forward, an amount by which the angle of the camera 10a and/or the sensor 10b is to be changed, and the like in response to the amount by which the vehicle body 2 has been raised, and instructs the position changer 111, the angle changer 112, and the like to adjust the detection by the front situation detector 10A so as to prevent failure to detect an object (person A) at a detection position P. The detection adjustment like this for enabling detection of an object at a detection position P is referred to as the detection position matching.

This detection position matching in response to raising of the vehicle body 2 can also be performed for the rear situation detector 10B, whose detection position is set rearward of the working vehicle 1. FIG. 11 shows a state in which, in the detection position matching of the front situation detector 10A and the rear situation detector 10B in response to raising of the vehicle body 2, the orientations of the cameras 10a and the sensors 10b are changed downward to enable detection of objects at detection positions Pa and Pb that were detectable before the vehicle body 2 is raised. Specifically, the detection adjusters 110 perform detection position matching of the front situation detector 10A and the rear situation detector 10B by changing the orientations of the detectors (cameras 10a, sensors 10b) after the change in the state of the vehicle body 2 to orientations that differ from the orientations of the detectors (cameras 10a, sensors 10b) before the change in the state of the vehicle body 2.

The detection position matching of the front situation detector 10A and the rear situation detector 10B may be performed by changing at least the orientations of the cameras 10a and the sensors 10b in the front-rear direction. Furthermore, when the battery 50 is moved forward by the battery moving actuator 81, the position of the front situation detector 10A may be adjusted in response to the movement.

In the above-described example embodiment, the orientations of the cameras 10a and the sensors 10b are changed. However, the detection adjusters 110 may perform detection position matching of the front situation detector 10A and the rear situation detector 10B by changing the positions of the detectors (cameras 10a, sensors 10b) after the change in the state of the vehicle body 2 to positions that differ from the positions of the detectors (cameras 10a, sensors 10b) before the change in the state of the vehicle body 2.

Because the traveling structures 3 do not move in the up-down direction unlike the vehicle body 2, there is no need to perform the detection position matching in response to raising of the vehicle body 2 for the left situation detector 10C provided on the left traveling structure 3L and the right situation detector 10D provided on the right traveling structure 3R.

However, if the left traveling structure 3L and/or the right traveling structure 3R move in the left-right direction due to a change in the shape (for example, expansion) of the vehicle body 2 caused by extension or retraction of the width-change cylinders 8 of the vehicle-body-shape changer 80 of the vehicle-body-state changer 100, the left situation detector 10C and/or the right situation detector 10D move with the traveling structures 3. Because the position of the left situation detector 10C and/or the right situation detector 10D relative to the detection positions set at the left and right sides of the working vehicle 1 in accordance with the width in the left-right direction at a normal time changes, the detection may become difficult depending on the detection positions.

Hence, for example, the controller 15 may instruct the angle changer 112 to change the orientation of the camera 10a and/or the sensor 10b of the left situation detector 10C and/or the right situation detector 10D in response to movement of the traveling structures 3 in the left-right direction caused by actuation of the vehicle-body-shape changer 80.

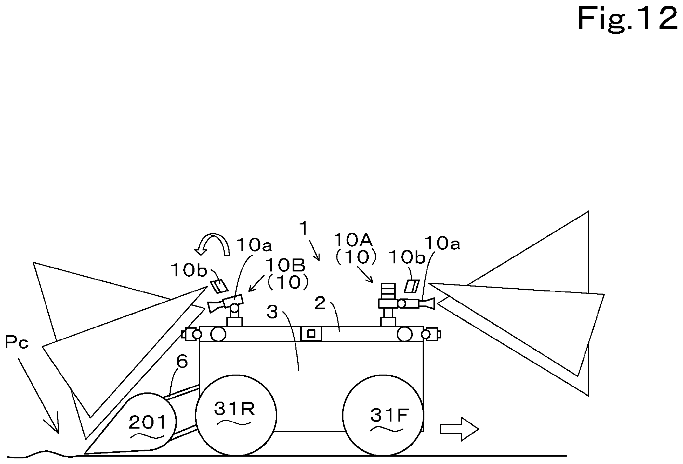

Another mode of change in the state of the vehicle body 2 is coupling (attachment) of the working device 200 to the vehicle body 2. Embodiments illustrated in FIGS. 12 to 14 show the operations of the detection adjusters 110 and the like when various working devices 200 are coupled to the vehicle body 2.

FIG. 12 shows a case where a ground working device 201 is attached to the rear of the vehicle body 2. Examples of the ground working device 201 include various devices, such as a cultivator including a rotary-type cultivator, a ridge former, a seeder, and a spreader for fertilizer, chemicals, and the like.

When the working vehicle 1 moves while towing the ground working device 201 like this, a state of soil that has been worked (for example, cultivated soil in a case of a cultivator) appears rearward of the ground working device 201 as the working vehicle 1 moves. To acquire more information on the soil, the camera 10a and the sensor 10b may be oriented toward the distance, in a more nearly horizontal direction so that an image of the cultivated soil can be captured while minimizing the entry of the ground working device 201 into the imaging range.

Among the plurality of situation detectors 10 described above, the rear situation detector 10B is provided to detect a situation rearward of the working vehicle 1. Hence, to confirm the cultivated soil appearing rearward of the ground working device 201, the camera 10a and the sensor 10b may be oriented toward the distance, in a more nearly horizontal direction.

The controller 15, when the ground working device 201 is coupled to the vehicle body 2, may perform detection position matching of the rear situation detector 10B by using the angle changer 112 or the like such that the area rearward of the ground working device 201 is a detection position Pc. Alternatively, it may be determined whether the rear situation detector 10B is in a state capable of confirming the progress of work in which the working vehicle 1 actually tows the ground working device 201, and detection position matching of the rear situation detector 10B may be performed based on this determination.

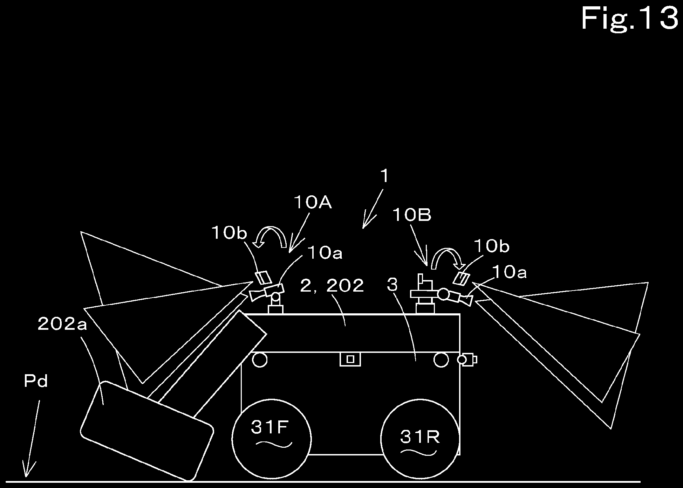

FIG. 13 illustrates detection position matching performed when a combine unit 202 as an example of the working device 200 is mounted on the vehicle body 2 (or the traveling structures 3).

As described above, when the ground working device 201 that is coupled to the rear of the vehicle body 2 is used, the downward angles of the camera 10a and the sensor 10b of the rear situation detector 10B are reduced and the camera 10a and the sensor 10b are oriented toward the distance such that the detection position Pc rearward of the ground working device 201 can be detected.

In contrast, the combine unit 202 (grain culm harvester) is attached to the vehicle body 2, from the side toward the front of the working vehicle 1, and in particular, a reaper 202a, which easily enters the field of view, is present forward of the working vehicle 1. Hence, the downward angles of the camera 10a and the sensor 10b of the front situation detector 10A, not the rear situation detector 10B, are reduced and the camera 10a and the sensor 10b are oriented toward the distance such that a detection position Pd forward of the reaper 202a can be detected. The position and orientation of the rear detector 10B are set such that the ground is imaged without being obstructed by the combine unit.

By performing detection positioning of the front situation detector 10A in this manner, a growth state or the like of unharvested crops forward of the reaper 202a is known, and, for example, the vehicle body 2 may be moved up or down to change the height of the reaper 202a itself. The detection position matching of the front situation detector 10A or the like may also be performed, using the detection adjuster 110, in response to this upward or downward movement of the vehicle body 2.

The combine unit 202 attached to the working vehicle 1 extends over the upper portions of the traveling structures 3 and the vehicle body 2, and thus may interfere with the situation detector 10. In this case, an attachment portion to which the situation detector 10 is to be attached may be provided on the combine unit 202, and the situation detector 10 may be detached from the vehicle body 2 and attached to the combine unit 202. When the situation detector 10 once detached is attached, the initial states including the position, height, and orientation of the camera 10a and the sensor 10b may be reset.

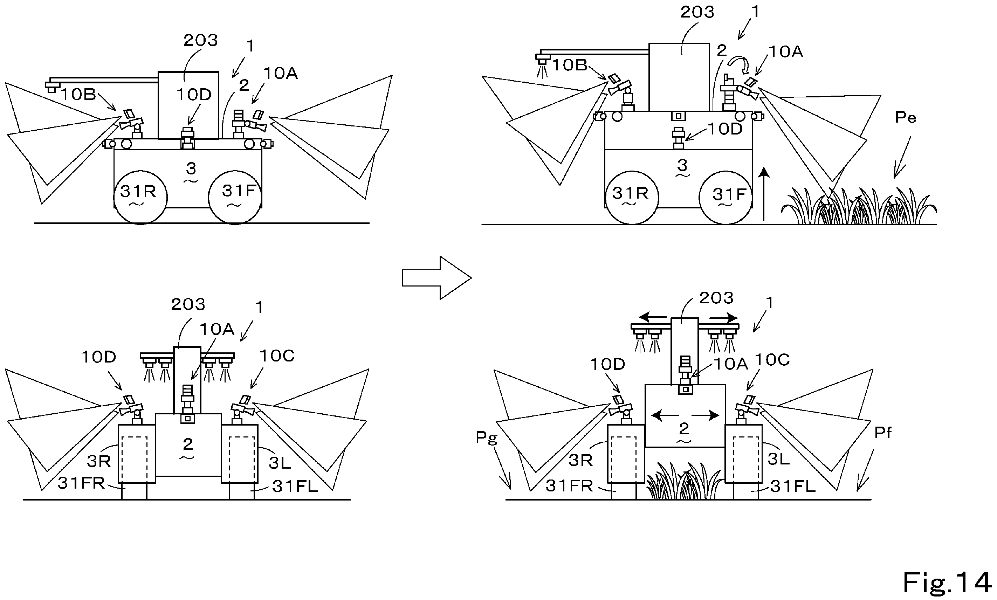

FIG. 14 illustrates detection position matching performed when a sprayer 203 as an example of the working device 200 is mounted on the vehicle body 2 (or the traveling structures 3). In this case, instead of detection position matching corresponding to the sprayer 203 mounted on the vehicle body 2, detection position matching is performed for enabling detection of an object (crop or the like) at a detection position where a target of spraying by the sprayer 203 is present, in response to a movement (raising) or a change in the shape (a change in the width) of the vehicle body 2. Specifically, detection position matching of the situation detector 10 is performed when the controller 15, taking into consideration the growth state of crops or the like, actuates the vehicle-body-shape changer 80 or the vehicle-body mover 90 (see FIG. 7) of the vehicle-body-state changer 100 to raise the vehicle body 2 or to expand the vehicle body 2 in the left-right direction.

For example, when crops on a ridge, which are the targets of spraying by the sprayer 203, have grown tall, the vehicle body 2 needs to be raised such that the vehicle body 2 passes over the crops. Thus, as described above, the controller 15, in response to the raising of the vehicle body 2, controls the detection adjuster 110 and performs detection position matching of the front situation detector 10A such that the situation (of the crops or the like) at a detection position Pe immediately in front of the working vehicle 1 can be reliably detected, as illustrated in FIG. 14.

In spraying work performed by the sprayer 203, the shape (width) of the vehicle body 2 may be changed in accordance with the width of the ridge. Also in this case, the controller 15 controls the detection adjusters 110 in response to the change in width of the vehicle body 2, and performs detection position matching of the left situation detector 10C and the right situation detector 10D such that the situations (of crops or the like) at detection positions Pf and Pg at the left and right sides of the working vehicle 1 can be reliably detected, as illustrated in FIG. 14.

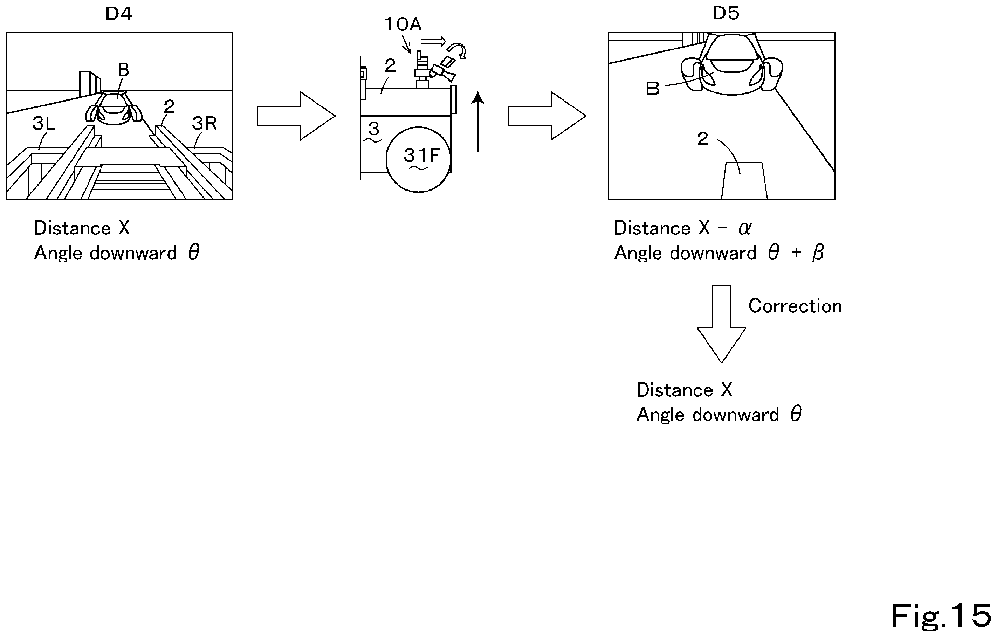

The operation and the like of the detection adjusters 110 for performing the detection position matching of the situation detectors 10 in response to a change in the state of the vehicle body 2 have been described above. Next, correction of parameters when detection adjustment of the situation detectors 10 is performed by the detection adjusters 110 will be described with reference to FIG. 15.

Here, the parameters are, for example, values calculated by the calculator 10c for an object (person or the like) detected by the camera 10a or the sensor 10b, and are, for example, values indicating the distance and the position in the direction from the working vehicle 1 to the object captured in the image. The controller 15 controls rotation of the traveling motor 33 and steers the wheels 31 by using, for example, the automatic driving controller 15A (see FIG. 7), based on the parameters calculated by the calculator 10c.

Typically, the calculator 10c reads the distance or the like from the camera 10a and the sensor 10b of the corresponding situation detector 10 to a detection target, and uses these as parameters representing the distance or the like from the working vehicle 1 to the detection target.

However, if the position and angle of the situation detector 10 are changed by the actuation of the detection adjuster 110 for the detection position matching after a change in the state of the vehicle body 2, the position and direction (angle) of the camera 10a and the sensor 10b relative to the vehicle body 2 change, which changes the parameters.

For example, it is assumed that, when the vehicle body 2 is at a normal height, the calculator 10c of the front situation detector 10A calculates, for an object B (a stopped vehicle in the present example embodiment) at the detection position P forward of the working vehicle 1, the distance from the camera 10a and/or the sensor 10b to the object B (stopped vehicle) as distance X, and calculates the angle in the up-down direction from the camera 10a and/or the sensor 10b to the object B (stopped vehicle) as a slightly downward angle θ, based on the detection result obtained by the camera 10a and/or the sensor 10b of the front situation detector 10A (a screen D4 in FIG. 15 represents an imaging result obtained by the camera 10a at this time).

If the vehicle body 2 is raised while the working vehicle 1 and the object B at the detection position P forward thereof remain stopped, the controller 15 moves the front situation detector 10A forward by a distance α using the position changer 111 of the detection adjuster 110 and changes the orientation of the camera 10a and/or the sensor 10b in the up-down direction downward by an angle β using the angle changer 112, such that the object at the detection position P immediately in front of the working vehicle 1 that was detectable before the raising can be detected after the raising.

Such forward movement and downward rotation of the front situation detector 10A changes the parameters calculated by the calculator 10c. Specifically, the calculator 10c calculates the distance to the object B as distance X - α, and calculates the angle in the up-down direction to the object B as downward angle θ + β.

If it is assumed that the controller 15 recognizes the distance and the angle from the camera 10a and/or the sensor 10b to the object, calculated by the calculator 10c, as the distance and the angle from the working vehicle 1 to the object B, the controller 15 erroneously recognizes that the object B approaches the working vehicle 1 by distance α and is oriented downward by angle β in the up-down direction, despite the fact that the working vehicle 1 and the object B both remain stopped and do not change orientation in the up-down direction. Specifically, as displayed in a screen D5, the state of the object B captured in an image by the camera 10a that has been moved and whose angle has been changed for the detection position matching is recognized as the state of the object B with respect to the working vehicle 1.

If the controller 15 uses the parameters changed in accordance with the detection adjustment performed by the detection adjuster 110 and controls the traveling motor 33 and the steering cylinder 35 with the automatic driving controller 15A, the working vehicle 1 performs an inappropriate operation.

Hence, when the position, angle, and the like of the situation detector 10 are adjusted by using the detection adjuster 110 after the state of the vehicle body 2 is changed by the vehicle-body-state changer 100, the controller 15 corrects the parameters calculated by the calculator 10c to parameters (in the above example, distance X and downward angle θ) that are not changed by the detection adjustment performed by the detection adjuster 110.

Alternatively, the calculator 10c provided in the situation detector 10 may correct the parameters to be calculated, in response to changes in the distance and angle of the situation detector 10 caused by the detection adjuster 110.

By correcting the parameters as above, the controller 15 correctly recognizes the state of the object detected by the situation detector 10, and can execute an appropriate operation of the working vehicle 1 using, for example, controllers, such as the automatic driving controller 15A, the distance change controller 15B, the height change controller 15C, and the position change controller 15D, as illustrated in FIG. 7.

Advantageous effects achieved by features of the working vehicle 1 described above will be described below.

(Item 1) A working vehicle 1 including a vehicle body 2, a detector 10 provided in or on the vehicle body 2 to detect an object present at a predetermined detection position distant from the vehicle body 2, a vehicle-body-state changer 100 to change a state of the vehicle body 2, and a detection adjuster 110 to perform a detection position matching to achieve a match between the detection position before a change in the state of the vehicle body 2 and the detection position after the change in the state of the vehicle body 2.

With this configuration, an object located at a position that was detectable before a change in the state of the vehicle body 2 can be reliably detected also after the change in the state of the vehicle body 2.

(Item 2) The working vehicle 1 according to item 1, wherein the detection adjuster 110 is configured to perform the detection position matching by changing a position of the detector 10 after the change in the state of the vehicle body to a position that differs from the position of the detector 10 before the change in the state of the vehicle body 2.

With this configuration, the detection adjuster 110 has a typical structure, such as one using a rail or the like, for changing the position of the detector 10. Thus, cost reduction can be achieved.

(Item 3) The working vehicle 1 according to item 1 or 2, wherein the detection adjuster 110 is configured to perform the detection position matching by changing an orientation of the detector 10 after the change in the state of the vehicle body 2 to an orientation that differs from the orientation of the detector 10 before the change in the state of the vehicle body 2.

With this configuration, the detection adjuster 110 has a typical structure, such as a swing-type structure, for changing the angle of the detector 10. Thus, cost reduction can be achieved.

(Item 4) The working vehicle 1 according to any one of items 1 to 3, wherein the detector 10 is configured to, after the change in the state of the vehicle body 2, if a parameter indicating a result of detection of the object present at the detection position changes due to the detection position matching performed by the detection adjuster 110, correct the changed parameter to a parameter indicating a result of detection of the object that was present at the same position before the change in the state of the vehicle body 2 and before the detection position matching.

With this configuration, even if the detection position matching is performed after a change in the state of the vehicle body 2, erroneous recognition of the position, direction, and the like of an object, such as an obstacle, present at a detection position can be prevented by the correction of the parameters.

(Item 5) The working vehicle 1 according to any one of items 1 to 4, wherein the vehicle-body-state changer 100 includes a vehicle-body mover 90 to move the vehicle body 2, and the detection adjuster 110 is configured to perform the detection position matching according to a movement of the vehicle body 2 caused by the vehicle-body mover 90.

With this configuration, an object, such as an obstacle, located at a position that was detectable before a movement of the vehicle body 2 can be reliably detected also after the movement of the vehicle body 2.

(Item 6) The working vehicle 1 according to item 5, wherein the vehicle-body mover 90 (vehicle-body raising/lowering cylinder 9) is configured to move the vehicle body 2 in an up-down direction.

With this configuration, an object, such as an obstacle, located at a position that was detectable before a movement of the vehicle body 2 in the up-down direction can be reliably detected also after the movement of the vehicle body 2. For example, even if the posture of the vehicle body 2 has changed due to upward movement of the vehicle body 2, the detector 10, which is capable of detecting an obstacle (person or the like) forward of or rearward of the vehicle body, can reliably detect an obstacle (person or the like) around a front portion or a rear portion of the vehicle body 2.

(Item 7) The working vehicle 1 according to any one of items 1 to 6, wherein the vehicle-body-state changer 100 includes a vehicle-body-shape changer 80 to change a shape of the vehicle body 2, and the detection adjuster 110 is configured to perform the detection position matching according to a change in a shape of the vehicle body 2 caused by the vehicle-body-shape changer 80.

With this configuration, an object, such as an obstacle, located at a position that was detectable before a change in the shape of the vehicle body 2 can be reliably detected also after the change in the shape of the vehicle body 2.

(Item 8) The working vehicle 1 according to item 7, further including a left traveling structure 3L provided at a left side of the vehicle body 2, and a right traveling structure 3R provided at a right side of the vehicle body 2, wherein the vehicle-body-shape changer 80 (width-change cylinder 8) is configured to change a width of the vehicle body 2 in a left-right direction, to change the shape of the vehicle body 2 and change a vehicle corresponding to a distance between the left traveling structure 3L and the right traveling structure 3R in the left-right direction.

With this configuration, an object, such as an obstacle, located at a position that was detectable before a change in the width of the vehicle body 2 can be reliably detected also after the change in the width of the vehicle body 2 in the left-right direction. For example, the detector 10 capable of detecting an obstacle (person or the like) at the left side of the left traveling structure 3L or at the right side of the right traveling structure 3R can reliably detect the area around a left portion or a rear portion of the vehicle body as the width of the vehicle body changes.

(Item 9) The working vehicle 1 according to any one of items 1 to 8, wherein the vehicle-body-state changer 100 includes a linkage 6 to couple one of working devices 200 selectively to the vehicle body 2, and the detection adjuster 110 is configured to perform the detection position matching according to the one of the working devices 200 coupled to the vehicle body 2 via the linkage 6.

With this configuration, an object, such as an obstacle, can be reliably detected regardless of a change in the state of the vehicle body 2 in which the working device 200 is coupled to the vehicle body 2 of the working vehicle 1.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: traveling structure
- 3L: left traveling structure
- 3R: right traveling structure
- 6: linkage
- 8: vehicle-body raising/lowering cylinder
- 9: width-change cylinder
- 10: detector
- 80: vehicle-body-shape changer
- 90: vehicle-body mover
- 100: vehicle-body-state changer
- 110: detection adjuster
- 200: working device

## Claims

1. A working vehicle comprising:
a vehicle body;
a detector provided in or on the vehicle body to detect an object present at a predetermined detection position distant from the vehicle body;
a vehicle-body-state changer to change a state of the vehicle body; and
a detection adjuster to perform a detection position matching to achieve a match between the detection position before a change in the state of the vehicle body and the detection position after the change in the state of the vehicle body.

2. The working vehicle according to claim 1, wherein the detection adjuster is configured to perform the detection position matching by changing a position of the detector after the change in the state of the vehicle body to a position that differs from the position of the detector before the change in the state of the vehicle body.

3. The working vehicle according to claim 1, wherein the detection adjuster is configured to perform the detection position matching by changing an orientation of the detector after the change in the state of the vehicle body to an orientation that differs from the orientation of the detector before the change in the state of the vehicle body.

4. The working vehicle according to claim 1, wherein the detector is configured to, after the change in the state of the vehicle body, if a parameter indicating a result of detection of the object present at the detection position changes due to the detection position matching performed by the detection adjuster, correct the changed parameter to a parameter indicating a result of detection of the object that was present at the same position before the change in the state of the vehicle body and before the detection position matching.

5. The working vehicle according to any one of claims 1 to 4, wherein
the vehicle-body-state changer includes a vehicle-body mover to move the vehicle body; and
the detection adjuster is configured to perform the detection position matching according to a movement of the vehicle body caused by the vehicle-body mover.

6. The working vehicle according to claim 5, wherein the vehicle-body mover is configured to move the vehicle body in an up-down direction.

7. The working vehicle according to any one of claims 1 to 4, wherein
the vehicle-body-state changer includes a vehicle-body-shape changer to change a shape of the vehicle body; and
the detection adjuster is configured to perform the detection position matching according to a change in a shape of the vehicle body caused by the vehicle-body-shape changer.

8. The working vehicle according to claim 7, further comprising:
a left traveling structure provided at a left side of the vehicle body; and
a right traveling structure provided at a right side of the vehicle body; wherein
the vehicle-body-shape changer is configured to change a width of the vehicle body in a left-right direction, to change the shape of the vehicle body and change a vehicle width corresponding to a distance between the left traveling structure and the right traveling structure in the left-right direction.

9. The working vehicle according to any one of claims 1 to 4, wherein
the vehicle-body-state changer includes a linkage to couple one of working devices selectively to the vehicle body; and
the detection adjuster is configured to perform the detection position matching according to the one of the working devices coupled to the vehicle body via the linkage.
